(19) **Europäisches Patentamt / European Patent Office / Office européen des brevets**

(11) **EP 4 757 482 A1**

(12) **EUROPEAN PATENT APPLICATION**
published in accordance with Art. 153(4) EPC

(43) Date of publication:
**10.06.2026 Bulletin 2026/24**

(21) Application number: **23947090.9**

(22) Date of filing: **01.08.2023**

(51) International Patent Classification (IPC):
*H04W 74/08* (2024.01)

(52) Cooperative Patent Classification (CPC):
**H04W 56/00; H04W 74/08**

(86) International application number:
**PCT/CN2023/110587**

(87) International publication number:
**WO 2025/025142 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventor: **ZHAO, Zheng
Shanghai 201601 (CN)**

(74) Representative: **Fish & Richardson P.C.
Highlight Business Towers
Mies-van-der-Rohe-Straße 8
80807 München (DE)**

(54) **WIRELESS COMMUNICATION METHOD, TERMINAL DEVICE AND NETWORK DEVICE**

(57) A wireless communication method, a terminal device, and a network device are provided. In the wireless communication method, a terminal device determines a TA adjustment value and/or a TA based on first information, and the terminal device sends an uplink signal/channel to a network device based on the TA adjustment value and/or the TA. The first information is associated with one or more of the following: a downlink measurement amount, downlink synchronization related information, a downlink reference time, and and fingerprint information collected by the terminal device.

```
┌─────────────────┐                          ┌─────────────────┐
│ Terminal device │                          │ Network device  │
└─────────────────┘                          └─────────────────┘
         │                                            │
┌──────────────────────────────────────────┐         │
│ S310, determine a TA adjustment value and/ │         │
│ or the TA based on the first information.  │         │
└──────────────────────────────────────────┘         │
         │         S320, uplink signal/channel        │
         │───────────────────────────────────────────▶│
         │                                            │
```

FIG. 3

## Description

### TECHNICAL FIELD

The various embodiments described in this document relate in general to the field of communication technology, and more specifically to a wireless communication method, a terminal device, and a network device.

### BACKGROUND

In order to improve a flexibility of timing advance (TA) adjustment, some communication systems (such as new radio (NR) systems) plan to introduce a mechanism for a terminal device to actively adjust the TA. Therefore, how to adjust the TA for the terminal device is an urgent problem that needs to be solved.

### SUMMARY

The embodiments of the present disclosure provide a wireless communication method, a terminal device, and a network device. Below is an introduction to the various aspects involved in the present disclosure.

According to a first aspect, a wireless communication method is provided and includes: determining, by a terminal device, a TA adjustment value and/or a TA based on first information, and sending, by the terminal device, an uplink signal/channel to a network device based on the TA adjustment value and/or the TA. The first information is associated with one or more of the following: a downlink measurement amount, downlink synchronization related information, a downlink reference time, and fingerprint information collected by the terminal device.

According to a second aspect, a wireless communication method is provided and includes receiving, by a network device, an uplink signal/channel sent by a terminal device. The uplink signal/channel is transmitted based on a TA of the terminal device, and the TA and/or a TA adjustment value of the TA are determined by the terminal device based on first information associated with one or more of the following: a downlink measurement amount, downlink synchronization related information, a downlink reference time, and fingerprint information collected by the terminal device.

According to a third aspect, a terminal device is provided and includes a determination module configured to determine a TA adjustment value and/or a TA based on first information, and a first sending module configured to send an uplink signal/channel to a network device based on the TA adjustment value and/or the TA. The first information is associated with one or more of the following: a downlink measurement amount, downlink synchronization related information, a downlink reference time, and the fingerprint information collected by the terminal device.

According to a fourth aspect, a network device is provided and includes a first receiving module configured to receive an uplink signal/channel sent by a terminal device. The uplink signal/channel is transmitted based on a TA of the terminal device, and the TA and/or a TA adjustment value of the TA are determined by the terminal device based on first information associated with one or more of the following: a downlink measurement amount, downlink synchronization related information, a downlink reference time, and fingerprint information collected by the terminal device.

According to a fifth aspect, a terminal device is provided and includes a processor, a memory, and a communication interface. The memory is configured to store one or more computer programs, and the processor is configured to call the computer programs in the memory to cause the terminal device to perform some or all of the operations in the wireless communication method of the first aspect.

According to a sixth aspect, a network device is provided and includes a processor, a memory, and a communication interface. The memory is configured to store one or more computer programs, and the processor is configured to call the computer programs in the memory to cause the network device to perform some or all of the operations in the wireless communication method of the second aspect.

According to a seventh aspect, a communication system is provided and includes the terminal device and/or the network device mentioned above. In another possible design, the communication system may also include other devices that interact with the terminal device or the network device as provided in the embodiments of the present disclosure.

According to an eighth aspect, a computer-readable storage medium is provided and stores a computer program that causes a computer to perform some or all of the operations in the methods described above.

According to a ninth aspect, a computer program product is provided. The computer program product includes a non-transient computer-readable storage medium storing a computer program, and the computer program is operable to cause a computer to perform some or all of the operations in the wireless communication methods of the various aspects described above. In some embodiments, the computer program product may be a software installation package.

According to a tenth aspect, a computer program is provided and is operable to cause a computer to perform some or all of the operations in the wireless communication methods of the various aspects described above.

According to an eleventh aspect, a chip is provided and includes a memory and a processor. The processor may call and run a computer program from the memory to perform some or all of the operations described in the wireless communication methods of the above aspects.

In the embodiments of the present disclosure, the terminal device may determine the TA adjustment value and/or the TA based on the first information; in other words, the terminal device may actively adjust the TA based on the first information, which reduces energy consumption and improves the flexibility of the TA adjustment.

## BRIEF DESCRIPTION OF THE DRAWINGS

FIG. 1 is a schematic diagram of an example of a system architecture of a wireless communications system to which an embodiment of the present disclosure may be applied.

FIG. 2A is a schematic diagram showing an uplink transmission delay without a TA mechanism.

FIG. 2B is a schematic diagram showing an uplink transmission delay with a TA mechanism.

FIG. 3 is a schematic flowchart of a wireless communication method according to an embodiment of the present disclosure.

FIG. 4 is a schematic diagram of a RSTD corresponding to a movement of a terminal device.

FIG. 5 is a schematic diagram showing a terminal device measuring downlink synchronization times of different cells.

FIG. 6 is a schematic flowchart of a wireless communication method according to another embodiment of the present disclosure.

FIG. 7 is a schematic flowchart of a wireless communication method according to yet another embodiment of the present disclosure.

FIG. 8 is a schematic flowchart of a wireless communication method according to a further embodiment of the present disclosure.

FIG. 9 is a schematic structural diagram of a terminal device according to an embodiment of the present disclosure.

FIG. 10 is a schematic structural diagram of a network device according to an embodiment of the present disclosure.

FIG. 11 is a schematic structural diagram of an apparatus for wireless communication according to an embodiment of the present disclosure.

## DETAILED DESCRIPTION OF THE EMBODIMENTS

Below, the technical solution in the present disclosure will be described in conjunction with the accompanying drawings.

## Architecture of a Communication System

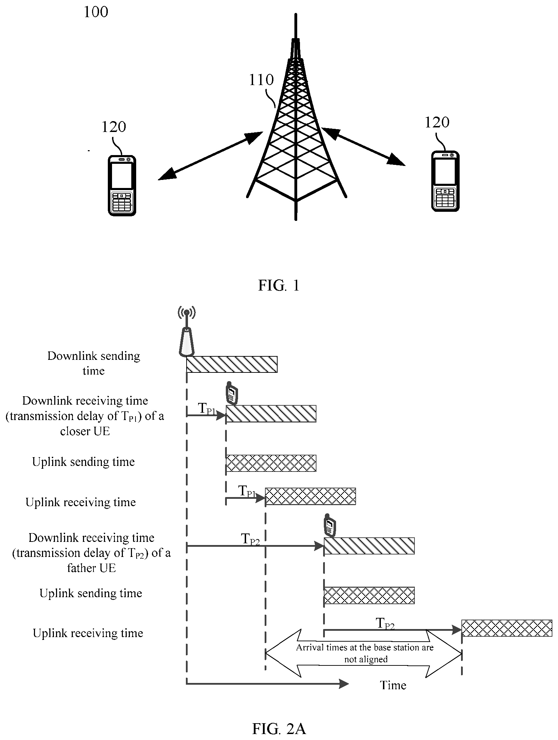

FIG. 1 is an example diagram of a system architecture of a wireless communication system 100 to which an embodiment of the present disclosure may be applied. The wireless communication system 100 may include a network device 110 and a terminal device 120. The network device 110 may be a device in communication with the terminal device 120. The network device 110 may provide communication coverage for a specific geographic area, and may communicate with the user equipment 120 located within the coverage range.

FIG. 1 is a schematic view showing one network device and two terminal devices. In some embodiments, the wireless communication system 100 may include a plurality of network devices, and another number of terminal devices may be included in the coverage range of each network device, which is not limited in embodiments of the present disclosure.

In some embodiments, the wireless communications system 100 may further include other network entities such as a network controller or a mobility management entity, which is not limited in the embodiments of the present disclosure.

It should be understood that the technical solution of the embodiments of the present disclosure may be applied to various communication systems, such as a 5th generation (5G) system or a new radio (NR), a long term evolution (LTE) system, a LTE frequency division duplex (FDD) system, or a LTE time division duplex (TDD) system. The technical solution provided in the present disclosure may also be applied to future communication systems, such as a sixth generation system and a satellite communication system.

The terminal device in the embodiments of the present disclosure may also be referred to user equipment (UE), an access terminal, a user unit, a user station, a mobile station (MS), a mobile console, a mobile terminal (MT), a remote station, a remote terminal, a mobile device, a user terminal, a terminal, a wireless communication device, a user agent or a user device. The terminal device in the embodiments of the present disclosure may refer to a device that provides a user with voice and/or data connectivity, and may be configured to connect a person, an object, and a machine, such as handheld device or a vehicle mounted device with a wireless connection function. The terminal devices in the embodiment of the present disclosure may be a mobile phone, a tablet computer (Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote surgery (remote medical surgery), a wireless terminal in a smart grid, a wireless terminal in transportation safety, a wireless terminal in a smart city, a wireless terminal in a smart home, or the like. In some embodiments, the UE may act as a base station. For example, the UE may act as a scheduling entity that provides sidelink signals between UEs in V2X, D2D, or the like. For example, the cellular phone communicates with a car by using a sidelink signal, and the cellular phone communicates with a smart home device without the need to relay communication signals through base stations.

The network device in embodiments of the present disclosure may be a device configured to communicate with the terminal device. The network device may also be referred to as an access network device or a radio access network device. For example, the network device may be a base station. The network device in embodiments of the present disclosure may be a radio access network (RAN) node (or device) that enables the terminal device to access a wireless network. The base station may cover the following names in a broad sense, or may be interchanged with the following names, for example: a NodeB, an evolved NodeB eNB), a next generation NodeB (gNB), a relay station, an access point, a transmission reception point (TRP), a transmission point (transmission point, TP), a master eNodeB MeNB, a secondary eNodeB SeNB, a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, a similar device, or a combination thereof. The base station may alternatively be a communication module, a modem, or a chip that is disposed in the foregoing device or apparatus. Alternatively, the base station may be a mobile switching center, a device that performs a base station function in the device-to-device (D2D), the vehicle-to-everything (V2X), and the machine-to-machine (M2M) communication, a network side device in a 6G network, a device that performs the base station function in a future communication system, and the like. The base station may support networks using a same access technology or different access technologies. A specific technology and a specific device form used by the network device are not limited in the embodiments of the present disclosure.

The base station may be fixed or mobile. For example, a helicopter or an unmanned aerial vehicle may be configured to serve as a mobile base station, and one or more cells may move with a location of the mobile base station. In another example, a helicopter or an unmanned aerial vehicle may be configured as a device that communicates with another base station.

In some deployments, the network device in embodiments of the present disclosure may be a CU or a DU, or include a CU and a DU. A gNB may further include an AAU.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios of the network device and the terminal device are not limited in embodiments of the present disclosure.

It should be understood that all or part of the functions of the communication device in the present disclosure may also be implemented through software functions running on hardware, or through virtualization functions instantiated on platforms (such as cloud platforms).

## Timing advance (TA)

Since the wireless communication system has a good demodulation performance only when each subcarrier maintains orthogonality, the wireless communication system (such as a LTE/NR system) may adopt an orthogonal frequency division multiplexing (OFDM) transmission scheme. However, due to a transmission delay, a downlink signal is received by the terminal device after a certain delay. Due to different locations of different terminal devices relative to the network device, arrival times of uplink signals sent by different terminal devices at the network device are inconsistent, which seriously affects the orthogonality between the subcarriers and reduces the demodulation performance of the OFDM transmission scheme.

Taking an uplink transmission as an example, an important feature of the uplink transmission is that different terminal devices have orthogonal multiple accesses in time-frequency, that is, the uplink transmissions from different terminal devices in the same cell do not interfere with each other. The uplink transmission is generally the multi-terminal device transmission, thus, the network device may receive signals from multiple terminal devices simultaneously.

In order to ensure the orthogonality of the uplink transmission and avoid intra-cell interference, the network device requires that arrival times of the signals which are sent by different terminal devices at the same time and have different frequency domain resources be basically aligned with each other. This is because the network device may correctly decode uplink data sent by the terminal device as long as the network device receives the uplink data within a cyclic prefix range. In addition, in order to maintain the orthogonality between uplink reference signals using different cyclic shifts, the network device also requires that the received uplink reference signals be timely aligned. Therefore, the wireless communication system (such as the LTE/NR system) may have a mechanism for supporting an uplink TA to achieve an uplink synchronization or to ensure time synchronization on the network device.

The TA may be understood as a command sent by the network device to the terminal device to adjust the uplink transmission of the terminal device. The uplink transmission of the terminal device is not limited in the embodiments of the present disclosure. For example, the uplink transmission may include one or more of the following: a physical uplink shared channel (PUSCH), a physical uplink control channel (PUCCH), and a sounding reference signal (SRS).

In the communication system that support the uplink TA, an uplink clock and a downlink clock of the network device are the same, while there is an offset between an uplink clock and a downlink clock of the terminal device, and different terminal devices have different uplink TA amounts respectively. From the terminal device, a TA amount is essentially an offset between a starting time when the terminal device receives a downlink frame and a time when the terminal device transmits an uplink frame. By appropriately controlling the offset of each terminal device, the network device may control the arrival times of the uplink signals from different terminal devices at the network device to be basically aligned with each other. For the terminal device farther away from the network device, due to the significant transmission delay, the terminal device farther away from the network device need to send uplink data earlier than the terminal device closer to the network device.

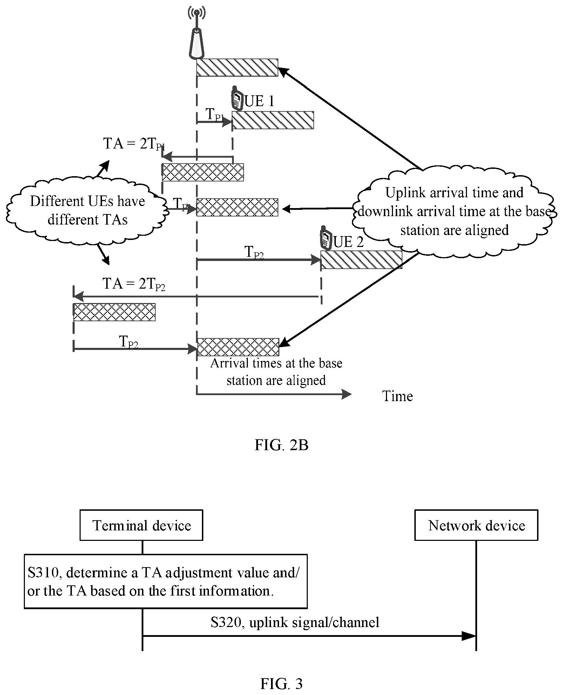

FIG. 2A and FIG. 2B respectively show the delay of the uplink signal arriving at the network device without the TA and the delay of the uplink signal arriving at the network device with the TA. As shown in FIG. 2A, the uplink signals sent by different terminal devices (such as the terminal devices with different distances from the network device) without the TA may arrive at the network device at different times, which may lead to the intra-cell interference. After introducing the TA, as shown in FIG. 2B, different terminal devices are configured with different uplink TAs, and the uplink signals sent by different terminal devices arrive at the network device at the same time, which avoids the intra-cell interference. Taking the different terminal devices shown in FIG. 2B as an example, namely a terminal device 1 and a terminal device 2, if the terminal device 1 and the terminal device 2 receive the downlink signals and send the uplink signals synchronously, the uplink signal sent by the terminal device 1 has an offset of $2T_{p1}$ relative to the network device and the uplink signal sent by the terminal device 2 has an offset of $2T_{p2}$ relative to the network device, ensuring that the uplink signals of the terminal device 1 and the terminal device 2 arrive at the network device simultaneously. In other words, if the terminal device 1 and the terminal device 2 receive the downlink signals and send the uplink signals synchronously, the corresponding TA amounts for the terminal device 1 and the terminal device 2 are respectively $2T_{p1}$ and $2T_{p2}$, ensuring that the uplink signals sent by the terminal device 1 and the terminal device 2 arrive at the network device simultaneously.

The network device may determine a TA value of each terminal device by measuring the uplink transmission of the corresponding terminal device. The network device may send a TA command to the terminal device to notify the terminal device of the corresponding TA value. For example, the network device may send the TA command to the terminal device in two manners as follows.

Manner 1, obtaining of an initial TA. The terminal device may achieve initial uplink synchronization through a random access process. During the random access process, the network device may determine the TA value by measuring a received preamble and send the TA value to the terminal device through a timing advance command (TAC) field of a random access response (RAR) message. For example, the network device may carry a 12-bit TAC in the RAR message to indicate the initial TA to the terminal device.

Manner 2, adjustment of the TA in a radio resource control (RRC) connected state. Although the terminal device and the network device achieve uplink synchronization during the random access process, the timing of the uplink signal arriving at the network device may change over time. Therefore, the terminal device needs to continuously update the uplink TA amount of itself to maintain uplink synchronization. If the TA of the terminal device needs to be calibrated, the network device may send the TA command to the terminal device, requesting the terminal device to adjust an uplink timing. In some embodiments, the TA command is sent by the network device to the terminal device through a media access control element (MAC CE), which may also be referred to as a TA command MAC CE (i.e., the MAC CE carrying the TA command). That is, when the terminal device is in the RRC connected state, the terminal device may adjust the uplink transmission according to the MAC CE carrying the TA command.

In the carrier aggregation (CA) scenario, the terminal device may need to use different TAs for different uplink carriers, thus, the standard introduces timing advance groups (TAGs). The network device may configure up to 4 TAGs for each cell group of the terminal device and configure the TAG associated with the corresponding cell group for each cell. In some embodiments, the terminal device may maintain the TA for each TAG.

From the previous description, it may be seen that currently, an initial value of the TA and subsequent adjustments to the TA are notified to the terminal device by the network device, which leads to a poor flexibility in TA adjustment. For example, when the terminal device is in a RRC idle state or a RRC inactive state, the terminal device can not receive signals sent by the network device, thus the terminal device may not update or adjust the TA. In other words, when the terminal device does not enter the RRC connected state, the terminal device may not update or adjust the TA. As a specific example, assuming that the terminal device is in the RRC idle state or the RRC inactive state, and a location of the terminal device changes or the terminal device performs cell handover, the TA of the terminal device needs to be adjusted; however, since the terminal device can not receive the signal sent by the network device, although the terminal device has the ability to estimate the TA in some cases, the terminal device can not update or adjust the TA according to the standard.

As a possible implementation, in order to improve the flexibility of the TA adjustment, some communication systems (such as NR systems) plan to introduce a mechanism for the terminal device to actively adjust the TA. After introducing this mechanism, the terminal device may actively adjust the TA and send the uplink signal/channel to the network device according to the adjusted TA. However, there are no relevant regulations on how the terminal device actively adjusts the TA.

In response to the above issues, the embodiments of the present disclosure provide a wireless communication method, a terminal device, and a network device, which allows the terminal device to actively adjust the TA based on first information and thus reduces energy consumption and improves the flexibility of the TA adjustment.

The application scenarios of the embodiments of the present disclosure include various types, and the embodiments of the present disclosure are not limited thereto. In some embodiments, the wireless communication method in the embodiments of the present disclosure may be applied to scenarios of cell handover or cell reselection. In some embodiments, the wireless communication method in the embodiments of the present disclosure may be applied to scenarios where the location of the terminal device changes; in other words, the wireless communication method in the embodiments of the present disclosure may be applied to scenarios where the terminal devices moves. In some embodiments, the wireless communication method in the embodiments of the present disclosure may be applied to scenarios where the terminal device is in the RRC idle state, the RRC inactive state or the RRC connected state.

Below, the wireless communication method in the embodiments of the present disclosure will be introduced in conjunction with the accompanying drawings.

FIG. 3 is a schematic flowchart of a wireless communication method according to an embodiment of the present disclosure. The method shown in FIG. 3 is introduced from the perspective of interaction between the terminal device and the network device, such as the terminal device 120 and the network device 110 shown in FIG. 1. The method shown in FIG. 3 may include operations S310 and S320, which will be introduced below.

In S310, the terminal device determines a TA adjustment value and/or the TA based on the first information.

In some embodiments, the terminal device may determine the TA adjustment value (or TA adjustment amount) based on the first information. In some embodiments, after the terminal device determines the TA adjustment value based on the first information, the terminal device may determine an adjusted TA (or a new TA) based on the determined TA adjustment value and a unadjusted TA (or original TA).

In some embodiments, the terminal device may determine the TA based on the first information. In some embodiments, the TA determined by the terminal device based on the first information may be understood as the adjusted TA. As an implementation, the terminal device may determine the TA adjustment value based on the first information and determine the adjusted TA based on the determined TA adjustment value. However, the embodiments of the present disclosure are not limited thereto; in some embodiments, the TA determined by the terminal device based on the first information may also be the initial TA.

In the embodiments, the TA may also be understood as the TA value or the TA amount, or may be replaced by the TA value or the TA amount. For example, the terminal device determining the TA based on the first information may refer to the terminal device determining the TA value based on the first information. For example, the adjusted TA may refer to the adjusted TA value.

An indication method for the TA is not limited in the embodiments of the present disclosure. As an example, the TA may include one or more of the following: a time advance indication, a time advance indication sequence number, and an advance time for the terminal device to perform the uplink transmission relative to the downlink reference signal.

In some embodiments, the time advance indication may also be referred to as a timing advance indication (TA indication). In some embodiments, the time advance indication may be directly configured to indicate the TA value, such as the adjusted TA value. Taking FIG. 2A or FIG. 2B as an example, the TA of the terminal device 1 including the time advance indication may refer to the fact that the TA of the terminal device 1 may include $2T_{P1}$, for example, the TA of the terminal device 1 is equal to $2T_{P1}$, and the TA of the terminal device 2 including the time advance indication may refer to the fact that the TA of the terminal device 2 may include $2T_{P2}$, for example, the TA of the terminal device 2 is equal to $2T_{P2}$.

In some embodiments, the advance time for the terminal device to perform the uplink transmission relative to the downlink reference signal may refer to the amount of time by which the terminal device sends the uplink signal ahead of the time when the network device sends the downlink reference signal. In some embodiments, the advance time for the terminal device to perform the uplink transmission relative to the downlink reference signal may also be referred as the advance time for the terminal device to perform the uplink transmission relative to the downlink reference signal. Taking FIG. 2A or FIG. 2B as an example, the TA of the terminal device 1 including the advance time for the terminal device to perform the uplink transmission relative to the downlink reference signal may refer to the TA of the terminal device 1 including $T_{P1}$; the TA of terminal device 2 including the advance time for the terminal device to perform the uplink transmission relative to the downlink reference signal may refer to the TA of the terminal device 2 including $T_{P2}$.

In some embodiments, the TA of the terminal device may be equal to twice the advance time for the terminal device to perform the uplink transmission relative to the downlink reference signal. Taking the advance time as $T_{P1}$ as an example, the TA of the terminal device may be equal to $2T_{P1}$. Taking the advance time as $T_{P2}$ as an example, the TA of the terminal device may be equal to $2T_{P2}$.

In the embodiments of the present disclosure, the first information may be associated (related) with one or more types of information. For example, the first information may be associated with one or more of the following: a downlink measurement amount; downlink synchronization related information, a downlink reference time, and fingerprint information collected by the terminal device.

In S320, the terminal device sends the uplink signal/channel to the network device based on the TA adjustment value and/or the TA.

As an implementation, after the terminal device determines the TA adjustment value based on the first information, the terminal device may determine the adjusted TA based on the TA adjustment value and send the uplink signal/channel to the network device according to the adjusted TA.

As another implementation, after the terminal device determines the TA based on the first information, the terminal device may send the uplink signal/channel to the network device based on the determined TA.

In the embodiments of the present disclosure, the terminal device may actively adjust the TA based on the first information, which improves the flexibility of the TA adjustment. For example, when the terminal device is in the RRC idle state or the RRC inactive state, the terminal device may actively adjust the TA based on the first information rather than enter the RRC connected state and wait for the network device to send the TA command, which reduces energy consumption and is more timely and flexible.

For ease of understanding, the following provides a detailed introduction to the first information.

In some embodiments, the first information may be associated with the downlink measurement amount, which is not limited in the embodiments of the present disclosure. In some embodiments, the downlink measurement amount associated with the first information may include a measurement amount related to a cell signal quality, for example, the downlink measurement amount may include a reference signal receiving power (RSRP). However, the embodiments of the present disclosure are not limited thereto, and the downlink measurement amount may also include, for example, a reference signal receiving quality (RSRQ), a receiving signal strength indicator (RSSI), or a signal to interference plus noise ratio (SINR).

It should be understood that the TA may reflect distance information between the terminal device and the network device within the cell. For example, a smaller TA value may indicate that the terminal device corresponding to the TA is closer to the network device, while a larger TA value may indicate that the terminal device corresponding to the TA is farther away from the network device. Similarly, the measurement amount related to the cell signal quality may reflect the distance information between the terminal device and the network device. Taking the measurement amount related to the cell signal quality including the RSRP as an example, a smaller the RSRP measured by the terminal device may indicate the terminal device is father away from the network device, while a larger RSRP measured by the terminal device may indicate the terminal device is closer the network device. In this way, the terminal device may determine the TA information (such as the TA adjustment value and/or the TA) based on the measurement amount related to the cell signal quality, such as the RSRP. In other words, the terminal device may determine whether the location of itself has changed based on the measurement amount related to the cell signal quality such as the RSRP. If the location of the terminal device has changed, further information about the TA may be determined based on the measurement amount related to the cell signal quality such as the RSRP.

In some embodiments, a relationship between the TA and the distance (for example, a relationship between the TA of the terminal device and the distance between the terminal device and the network device) is associated (or related, correlated, etc.) with a subcarrier spacing.

In some embodiments, a granularity of the TA (i.e., a quantization interval corresponding to the TA) is associated with the subcarrier spacing, for example, the granularity of the TA is associated with a subcarrier spacing of a message 3 (Msg 3) in the random access process. Taking the NR system as an example, in the NR system, the granularity of the TA is associated with the subcarrier spacing of the Msg 3. The relationship between the granularity of the TA and the subcarrier spacing is presented below in conjunction with Table 1.

Table 1

| Subcarrier spacing | Granularity of TA (TA quantization interval) | Unit distance |
|---|---|---|
| 15 kHz | 0.52 us | 78 meters |
| 30 kHz | 0.26 us | 39 meters |
| 60 kHz | 0.13 us | 19 meters |
| 120 kHz | 0.07 us | 10 meters |

From Table 1, it may be seen that in the case of a subcarrier spacing of 15 kHz, the granularity of the TA changes by 0.52 us per unit distance change. In other words, when the subcarrier spacing is 15 kHz, the TA changes by 0.52 us every 78 meters. In the case of a subcarrier spacing of 30 kHz, the TA changes by 0.26 us per unit distance change. In other words, when the subcarrier spacing is 30 kHz, the TA changes by 0.26 us every 39 meters. In the case of a subcarrier spacing of 60 kHz, the granularity of the TA changes by 0.13 us per unit distance change. In other words, when the subcarrier spacing is 60 kHz, the TA changes by 0.13 us every 19 meters. In the case of a subcarrier spacing of 120 kHz, the TA changes by 0.07 us per unit distance change. In other words, when the subcarrier spacing is 120 kHz, the TA changes by 0.07 us every 10 meters.

Meanwhile, it may be seen that in some embodiments, the unit distance is associated with the subcarrier spacing. In other words, the unit distances corresponding to different subcarrier spacings are different. For example, the unit distance corresponding to a subcarrier spacing of 15 kHz is 78 meters, and the unit distance corresponding to a subcarrier spacing of 30 kHz is 39 meters.

In some embodiments, the smaller the granularity of the TA, the higher the accuracy of positioning of the terminal device.

In some embodiments, the first information may include a variation of the measurement amount related to the cell signal quality. Taking the RSRP as an example, the first information may include a variation of the RSRP.

In some embodiments, the variation of the measurement amount related to the cell signal quality may refer to the variations of the measurement amounts related to the cell signal quality measured by the terminal device at different times. For example, the variation of the RSRP may refer to the variation of the RSRPs measured by the terminal device at different times.

In some embodiments, the downlink measurement amount associated with the first information may include a positioning related measurement amount, for example, the downlink measurement amount may include a reference signal time difference (RSTD). As an example, the terminal device may determine the TA adjustment value and/or the TA based on the RSTD between the positioning reference signals (PRS) sent by the network device. The network device determines the TA adjustment value and/or the TA according to the same relationship, thus, the terminal device does not need to report the information related to the TA adjustment separately. The network device judges the TA adjustment situation based on the reported RSTD.

It should be understood that the positioning related measurement amount may be configured to determine the location of the terminal device, for example, the positioning related measurement amount may determine whether the location of the terminal device has changed, and/or determine a change amount of the location of the terminal device. A change in the location of the terminal device means a change in the distance between the terminal device and the network device, and the TA may also reflect the distance information between the terminal device and the network device. Therefore, the TA information may be determined based on the positioning related measurement amount (such as the RSTD). In some embodiments, the terminal device may determine whether the location of itself has changed based on the positioning related measurement amount such as the RSTD; if the location of the terminal device has changed, the TA information may be further determined based on the positioning related measurement amount such as the RSTD.

In some embodiments, the first information may include a variation of the positioning related measurement amount. Taking the RSTD as an example, the first information may include the variation of the RSTD.

In some embodiments, the variation of the positioning related measurement amount may refer to the variation of the positioning related measurement amounts measured by the terminal device at different times. For example, the variation of the RSTD may refer to the variation of the RSTDs measured by the terminal device at different times.

In some embodiments, the terminal device may measure the positioning related measurement amounts at different times within the cell to determine the variation of the positioning related measurement amount. Taking the RSTD as an example, the terminal device may measure the RSTD at different times within the cell and determine the variation of the RSTD based on the RSTDs at different times.

In some embodiments, the variation of the positioning related measurement amount may refer to the variation of the positioning related measurement amounts measured by the terminal device in different cells. For example, after a handover from the first cell to the second cell, the terminal device may obtain the variation of the positioning related measurement amount based on the measured measurement amounts of the first cell and the second cell. Taking the RSTD as an example, the terminal device may measure the RSTDs respectively corresponding to the first cell and the second cell to determine the variation of the RSTD.

In some embodiments, when the first cell and the second cell use a same reference node, the terminal device may measure the RSTDs corresponding to the first cell and the second cell to determine the variation of the RSTD.

In some embodiments, the first information may be associated with downlink synchronization related information, which is not limited in the embodiments of the present disclosure. In some embodiments, the downlink synchronization related information associated with the first information may include information about a downlink synchronization signal (or a synchronization signal, a downlink reference signal, etc.), such as information about a synchronization signal block (SSB). However, the embodiments of the present disclosure are not limited thereto, and the downlink synchronization signal associated with the first information may also be other downlink synchronization signals, such as those that will appear in future communication systems.

In some embodiments, the downlink synchronization related information associated with the first information may include information about a downlink synchronization time, such as the information about the downlink synchronization time of one or more cells.

In some embodiments, the downlink synchronization related information associated with the first information may include other downlink synchronization information in addition to the downlink synchronization signal, the downlink synchronization time, and other information listed above. The embodiments of the present disclosure are not limited thereto.

In some embodiments, the first information may be associated with a downlink reference time. For example, the first information may be associated with the downlink reference time of one or more cells. In some embodiments, the downlink reference time or the downlink reference time of the cell mentioned in the embodiments of the present disclosure may be understood as the time when the network device or the cell sends the downlink reference signal.

In some embodiments, the first information may be associated with the fingerprint information collected by the terminal device. In some embodiments, the terminal device may collect the measurement amounts related to the cell signal quality from different network devices (or cells), and values of these measurement amounts may also vary when the terminal device is in different locations. The "fingerprint information" mentioned in the embodiments of the present disclosure refers to the information of the measurement amounts related to the cell signal qualities of different network devices collected by the terminal device when the terminal device is in different locations.

In some embodiments, the first information may be associated with one type of the aforementioned information. For example, the first information is associated with the downlink measurement amount. Or, the first information may be associated with the downlink synchronization related information. Or, the first information may be associated with the fingerprint information collected by the terminal device, and so on.

In some embodiments, the first information may be associated with multiple types (at least two) of the aforementioned information. For example, the first information may be associated with the downlink synchronization related information and the downlink reference time. Or, the first information may be associated with the downlink measurement amount and the downlink reference time, etc.

For example, the first information may include one or more of the following: the RSRP, the RSTD, the SSB, the downlink synchronization time of one or more cells, the downlink reference time of one or more cells, and the fingerprint information collected by the terminal device. In other words, in some embodiments, the terminal device may determine the TA adjustment value and/or the TA based on one or more of the following: the SRRP, the RSTD, the SSB, the downlink synchronization time of one or more cells, the downlink reference time of one or more cells, and the fingerprint information collected by the terminal device.

For ease of understanding, the following will respectively introduce how the terminal device determines the TA adjustment value and/or the TA based on the first information, in combination with a first embodiment to a sixth embodiment. It should be noted that the first to sixth embodiments may be used alone or in any combination, and the embodiments of the present disclosure are not limited thereto. For example, the first embodiment may be used alone, in combination with the second embodiment, or in combination with the third embodiment. For example, the second embodiment may be used alone, in combination with the fourth embodiment, or in combination with the sixth embodiment. In addition to the combination methods listed above, the first to sixth Embodiments may be combined in other ways not listed. For the sake of simplicity, the way that the first to sixth Embodiments are used will not be listed here.

### First Embodiment: The first information being associated with the RSRP

As mentioned above, the TA may reflect the distance information between the terminal device and the network device within the cell, and the measurement amount related to the cell signal quality such as the RSRP may also reflect the distance information between the terminal device and the network device. Therefore, the terminal device may determine the TA adjustment value and/or the TA based on the measurement amount related to the cell signal quality such as the RSRP.

Taking the RSRP as an example, the RSRP may reflect a level of a path loss. For example, the relationship between the distance between the terminal device and the network device and the path loss may be expressed in the Formula (1).

$$PL = 22.0 \lg(d_{3D}) + 28.0 + 20 \lg(f_c) \qquad \text{Formula (1)}$$

where, PL represents the path loss between the terminal device and the network device; $d_{3D}$ indicates the distance between the terminal device and the network device; and $f_c$ represents a carrier frequency (carrier frequency).

In some embodiments, the first information may include the variation of the RSRP. In other words, in some embodiments, the terminal device may determine the TA adjustment value and/or the TA based on the variation of the RSRP.

In some embodiments, the variation of the RSRP may refer to the variation of the RSRPs measured by the terminal device at different times.

In some embodiments, when the unadjusted TA of the terminal device is different, even if the RSRP changes by the same amount, the corresponding TA adjustment value of the terminal device is varied. In other words, when the unadjusted TA of the terminal device is different, even if the RSRP changes by the same amount, the adjusted TA of the terminal device is varied.

In some embodiments, considering that the TA adjustment value and/or the TA corresponding to the terminal device may be different when the change amount of the RSRP remains unchanged, the TA adjustment value and/or the TA corresponding to the terminal device may be determined based on the variation of the RSRP and other information.

For example, in some embodiments, the terminal device may determine the TA adjustment value and/or the TA based on the variation of the RSRP and second information. The second information may be configured to indicate a relationship between the variation of the RSRP and a TA change ratio (or TA change rate).

The implementation of the relationship between the variation of the RSRP and the TA change ratio indicated by the second information is not limited in the embodiments of the present disclosure. In other words, an indication method of the TA change ratio is not limited in the embodiments of the present disclosure. As an implementation, the second information may be configured to indicate the relationship between the variation of the RSRP and a change multiple of the TA; in other words, the TA change ratio is indicated by the change multiple of the TA. For example, the second information may be configured to indicate that when the RSRP changes by 3 dB, the TA change ratio is 1.2 times. As another implementation, the second information may be configured to indicate the relationship between the variation of the RSRP and a number of TA units; in other words, the TA change ratio is indicated by the number of the TA units. For example, the second information may be configured to indicate that when the RSRP changes by 3dB, the TA change ratio is 3 TA units. As yet another implementation, the second information may be configured to indicate the relationship between the variation of the RSRP and the TA adjustment value; in other words, the TA change ratio is indicated by the TA adjustment value. For example, the second information may be configured to indicate that when the RSRP changes by 3dB, the TA change ratio is 0.52 us.

In some embodiments, the variation of the RSRP may be positive or negative, and the embodiments of the present disclosure are not limited thereto. For example, when the RSRP measured at a later moment increases compared to the RSRP measured at a previous moment, the variation of the RSRP may be positive. In other words, when the RSRP measured at the later moment decreases compared to the RSRP measured at the previous moment, the variation of the RSRP may be negative.

In some embodiments, the TA change ratio may be an increased proportion or a decreased proportion relative to an original TA, which is not limited in the embodiments of the present disclosure. For example, the TA change ratio being 1.2 times may indicate that the TA is increased by 1.2 times or decreased by 1.2 times relative to the original TA. As an example, the TA change ratio being 1.2 times when the RSRP increases by 3 dB may indicate that the adjusted TA is decreased by 1.2 times compared to the original TA. As another example, the TA change ratio being 3 TA units when the RSRP increases by 3 dB may indicate that the adjusted TA is decreased by 3 TA units compared to the original TA. As yet another example, the TA change ratio being 0.52 us when the RSRP increases by 3 dB may indicate that the adjusted TA is decreased by 0.52 us compared to the original TA.

A length of one TA unit is not limited in the embodiments of the present disclosure. For example, the length of one TA unit may be 0.52 us or 0.26 us. In some embodiments, the length of one TA unit may be associated with the subcarrier spacing. That is, the lengths of the TA units corresponding to different subcarrier spacings may vary. For example, when the subcarrier spacing is 15 kHz, the length of one TA unit may be 0.52 us; when the subcarrier spacing is 30 kHz, the length of one TA unit may be 0.26 us, etc.

The embodiments of the present disclosure do not limit the method of determining (indicating, configuring) the second information. In some embodiments, the second information may be configured by the network device or a positioning server, or sent by the network device or the positioning server to the terminal device. For example, the network device may configure the TA change ratio corresponding to different variations of the RSRP. In some embodiments, the second information may be a predefined or a pre-configured in a protocol. For example, the protocol may specify the TA change ratio corresponding to different variations of the RSRP.

The embodiments of the present disclosure do not limit the implementation form of the positioning server. In some embodiments, the positioning server may be a network element in a core network. Taking the positioning server as the network element in the core network as an example, the positioning server may be, for example, a location management function (LMF), a location management unit (LMU), or a location management center (LMC). In some embodiments, the positioning server may be other network elements, nodes, or devices configured to implement positioning service functions (for determining the location information of the terminal device). For example, the positioning server may be a network element or node configured to determine the location information of the terminal device in future communication systems. The embodiments of the present disclosure do not limit the name of the positioning server.

In some embodiments, the second information may include multiple types of information that may be configured to indicate various relationships between the variation of the RSRP and the TA change ratio. That is, in some embodiments, there may not be a one-to-one correspondence between the variation of the RSRP and the TA change ratio. For example, the variation of the RSRP and the TA change ratio may have a one to many or many to one correspondence.

In some embodiments, the second information may include multiple types of information that correspond to multiple area locations within the coverage range of the network device. In other words, the second information includes various types of information that may be configured to indicate the relationship between the variation of the RSRP and the TA change ratio in different area locations. For example, when the coverage range of the network devices is large (or in other words, when the cell is large), the relationship between the variation of the RSRP and the TA change ratio may vary in different areas within the coverage range of the network device. In other words, when the coverage range of the network device is large, the relationship between the variation of the RSRP and the TA change ratio may be segmented, and the relationship between the variation of the RSRP and the TA change ratio may vary in different segments.

An application scope of the second information is not limited in the embodiments of the present disclosure. For example, the second information may be associated with one or more of the following: the service cell of the terminal device, the service cell and a neighboring cell of the terminal device, a validity area of the terminal device, and an uplink transmission validity area of the terminal device. That is, the application scope of the second information may be one or more of the following: the service cell of the terminal device, the service cell and the neighboring cell of the terminal devices, the validity area of terminal devices, and the uplink transmission validity area of the terminal device.

As an example, the application scope of the second information is the service cell of the terminal device. In this way, all terminal devices within the service area of the terminal device may use the second information to determine the TA adjustment value and/or the TA; for example, the terminal device determines the TA adjustment value and/or the TA based on the variation of the RSRP and the second information.

As another example, the application scope of the second information is the service cell and the neighboring cell of the terminal device. In this way, all terminal devices in the service cell of the terminal device and all terminal devices in the neighboring cell may use the second information to determine the TA adjustment value and/or the TA.

As another example, the effective area the second information is the validity area of the terminal device or the uplink transmission validity area of the terminal device. In this way, all terminal devices within the area where the signal sent by the terminal device may arrive at and/or the area where the terminal device may receive the signal may use the second information to determine the TA adjustment value and/or the TA.

In some embodiments, on the one hand, the terminal device may determine the TA adjustment value and/or the TA based on the variation of the RSRP, and on the other hand, the terminal device may report a measurement value of the RSRP to the network device. In this way, when the network device receives the measurement value of the RSRP reported by the terminal device, the network device may determine the TA adjustment value and/or the TA based on the measurement value of the RSRP reported by the terminal device, without the need for the terminal device to specifically report the TA adjustment value and/or the TA.

However, the embodiments of the present disclosure are not limited thereto. In some embodiments, the terminal device may also report the TA adjustment related information to the network device, such as reporting one or more of the following information: whether the TA has been adjusted, the TA adjustment value, and the adjusted TA.

In the first embodiment, the terminal device may actively determine the TA adjustment value and/or the TA based on the RSRP (such as the variation of the RSRP), which is simple.

### Second Embodiment: The first information being associated with the RSTD within the same cell

As mentioned above, the TA may reflect the distance information between the terminal device and the network device within the cell, and the positioning related measurement amount such as the RSTD may also reflect the distance information between the terminal device and the network device. Therefore, the terminal device may determine the TA adjustment value and/or the TA based on the positioning related measurement amount such as the RSTD.

Considering that the terminal device may estimate a delay, that is, the terminal device may estimate the arrival times of the downlink signals from different network devices (such as a reference network device and a RSTD measurement network device) and report an arrival time difference to the network side, in the embodiments of the present disclosure, the TA adjustment value and/or the TA are determined based on the positioning related measurement amount such as the RSTD. Based on this, when the terminal device moves within the cell, the terminal device may determine the change of the TA based on the arrival time difference of the downlink signals sent by the network device at different times.

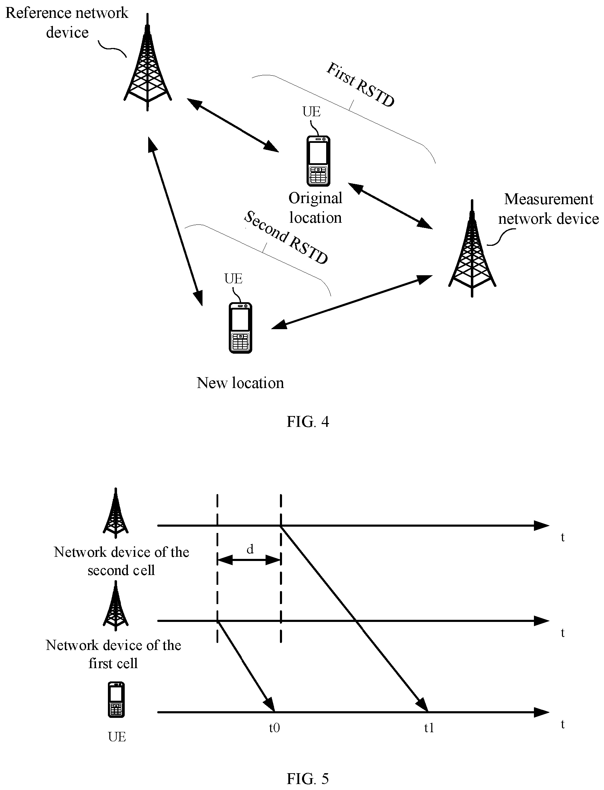

It should be noted that a single measured RSTD cannot reflect the change in the location of the user. Therefore, the terminal device cannot use only a single measured RSTD to determine the TA adjustment value and/or the TA, because the RSTD is the reference signal time difference, and when the terminal device moves, the location of the user relative to the reference network device (or the reference node) and the location of the user relative to the RSTD measurement network device (such as the network device within the service cell, or the network device within the neighboring cell) both change. FIG. 4 shows a schematic diagram of the RSTD corresponding to the movement of the terminal device. As shown in FIG. 4, a first RSTD corresponds to an original location (location before movement) of the terminal device, which is a difference between a time when the downlink signal of the reference network device arrives at the original location and a time when the downlink signal of the RSTD measurement network device arrives at the original location. A second RSTD corresponds to a new location (after movement) of the terminal device, which is the difference between a time when the downlink signal of the reference network device arrives at the new location and a time when the downlink signal of the RSTD measurement network device arrives at the new location. In this case, the terminal device cannot determine whether the terminal device has moved based solely on the first RSTD, nor can the terminal device determine the TA adjustment value and/or the TA based solely on the first RSTD. Similarly, the terminal device cannot determine whether the terminal device has moved based solely on the second RSTD, nor can the terminal device determine the TA adjustment value and/or the TA based solely on the second RSTD.

Therefore, in some embodiments, the variation of the RSTD may be configured to determine whether the terminal device has moved. In other words, in some embodiments, the TA adjustment value and/or the TA may be determined based on the variation of the RSTD.

In some embodiments, the first information may include the variation of the RSTD. In other words, in some embodiments, the terminal device may determine the TA adjustment value and/or the TA based on the variation of the RSTD.

In some embodiments, the variation of the RSTD may refer to the variation of the RSTDs measured by the terminal device at different times. For example, within the same cell, the terminal device may measure the RSTDs at different times and determine the variation of the RSTDs based on the measured RSTDs at different times. The variation of the RSTD mentioned in the second embodiment refers to the variation of the RSTDs measured by the terminal device at different times.

In some embodiments, when the variation of the RSTD is determined based on the RSTDs measured at different times within the same cell, the RSTDs measured at different times correspond to the same reference network device. For example, if the network device corresponding to the first cell is a first network device and the reference network device is a second network device, the terminal device may measure a time difference between a time when a downlink signal of the first network device arrives at the terminal device and a time when a downlink signal of the second network device arrives at the terminal device at different times, thereby obtaining the variation of the RSTD.

In some embodiments, when the variation of the RSTD exceeds (or is greater than) a certain threshold, the terminal device (or the network device) may consider that the TA needs to be adjusted.

The threshold corresponding to the variation of the RSTD is not limited in the embodiments of the present disclosure, and the threshold may be flexibly set according to system needs or actual needs. For example, if the variation of the RSTD is greater than 0.5 milliseconds, it can be considered that the TA needs to be adjusted. Or, if the variation of the RSTD is greater than 1 time slot, it can be considered that the TA needs to be adjusted.

In some embodiments, the TA adjustment value and/or the TA may be determined based on the variation of the RSTD and the unit distance. For example, the TA adjustment value may be determined according to Formula (2) below.

$$\text{The TA adjustment value} = \text{the variation of the RSTD/the unit distance}$$

$$\text{(Formula 2)}$$

In some embodiments, the variation of the RSTD in the above formula may be determined based on the RSTDs measured by the terminal device at different times.

In some embodiments, the unit distance mentioned above may be associated with the subcarrier spacing. For example, the correlation between the unit distance and the subcarrier spacing may be found in Table 1 above, where the unit distance corresponding to the subcarrier spacing of 15 kHz is 78 meters.

In some embodiments, if the variation of the RSTD is determined based on the RSTDs measured by the terminal device at different times within the same cell, the unit distance mentioned above may correspond to the same cell. For example, if the variation of the RSTD is determined based on the RSTDs measured by the terminal device at different times in the first cell, the unit distance mentioned above corresponds to the first cell.

In some embodiments, when the terminal device determines the TA adjustment value and/or the TA based on the positioning related measurement amount such as the RSTD, the network device may not be able to determine whether the terminal device has adjusted the TA based on the positioning related measurement amount such as the RSTD reported by the terminal device. Therefore, as an implementation, when the terminal device reports the positioning related measurement amount such as the RSTD to the network device, the terminal device may indicate the relevant information of the TA adjustment to the network device.

As an implementation, the terminal device may send a first message to the network device, and the first message may be configured to report the RSTD. In some embodiments, the first message may also carry first indication information which is configured to indicate the relevant information of the TA adjustment. For example, the first indication information may be configured to indicate one or more of the following: whether the terminal device has adjusted the TA, the TA adjustment value, and the adjusted TA, etc. For example, the first indication information may include whether the terminal device has adjusted the TA and the TA adjustment value. Or, the first indication information may include whether the terminal device has adjusted the TA and the adjusted TA. Or, the first indication information may include the adjusted TA.

However, the embodiments of the present disclosure are not limited thereto. An another implementation, the network device may determine the variation of the RSTD based on the RSTDs reported by the terminal device multiple times (e.g., two or more times), and determine whether the terminal device has adjusted the TA based on the variation of the RSTD. In some embodiments, if the network device determines that the terminal device has adjusted the TA based on the RSTDs reported by the terminal device multiple times, the network device may also determine the TA adjustment value and/or the adjusted TA based on the RSTDs reported by the terminal device multiple times.

In the second embodiment, the terminal device may determine the TA adjustment value and/or the TA based on the RSTD within the same cell, ensuring that the terminal device may adjust the TA in time when the terminal device is in the RRC idle state or the RRC inactive state, thereby improving the timeliness and flexibility of the TA adjustment.

### Third Embodiment: the first information being associated with RSTDs in different cells

The third embodiment is similar to the second embodiment, the difference lies in that the variation of the RSTD in the second embodiment is determined based on the RSTDs measured by the terminal device at different times within the same cell, while the variation of the RSTD in the third embodiment is determined based on the RSTDs measured by the terminal device in different cells relative to the same reference network device. Therefore, for the content not detailed in the third embodiment, please refer to the second embodiment mentioned above.

The technical solution of the third embodiment may be applied to scenarios where the terminal device moves between the cells; in other words, the technical solution of the third embodiment may be applied to scenarios where the terminal device moves across the cells. For example, the technical solution of the third embodiment may be applied to the scenario of cell reselection. Or, the technical solution of the third embodiment may be applied to the scenario of cell handover.

In some embodiments, the first information may include the variation of the RSTD. In other words, in some embodiments, the terminal device may determine the TA adjustment value and/or the TA based on the variation of the RSTD.

In some embodiments, the variation of the RSTD mentioned above may refer to the variation of the RSTD obtained by the RSTDs corresponding to different cells measured by the terminal device. For example, the terminal device may measure the RSTDs of different cells relative to the same reference network device, and determine the variation of the RSTD based on the measured RSTDs corresponding to different cells.

Taking the cell reselection from the first cell (a source cell) to the second cell (a target cell) by the terminal device as an example, when the first cell and the second cell use the same reference network device, the terminal device may determine the variation of the RSTD between the first cell and the second cell based on the measured RSTD corresponding to the first cell (i.e., the RSTD between the first cell and the reference network device) and the RSTD corresponding to the second cell (i.e., the RSTD between the second cell and the reference network device), and determine the TA adjustment value and/or the TA based on the variation of the RSTD.

In some embodiments, in the scenario where the terminal device moves from the first cell to the second cell, such as in the scenario where the terminal device reselects from the first cell to the second cell, the TA adjustment value and/or the TA mentioned in the present embodiment corresponds to the second cell. In other words, when the first cell and the second cell use the same reference network device to measure the corresponding RSTD, the terminal device may determine the TA adjustment value and/or the TA corresponding to the second cell based on the RSTD corresponding to the first cell and the RSTD corresponding to the second cell.

In some embodiments, when the variation of the RSTD exceeds (or is greater than) a certain threshold, the terminal device (or network device) may consider that the TA needs to be adjusted.

The threshold corresponding to the variation of the RSTD is not limited in the embodiments of the present disclosure, and the threshold may be flexibly set according to system needs or actual needs. For example, if the variation of the RSTD is greater than 0.5 milliseconds, it can be considered that the TA needs to be adjusted. Or, if the variation of the RSTD is greater than 1 time slot, it can be considered that TA needs to be adjusted.

As mentioned above, in some embodiments, the TA adjustment value and/or the TA may be determined based on the variation of the RSTD and the unit distance. For example, the TA adjustment value may be determined according to Formula (2) mentioned above. In the third embodiment, the variation of the RSTD in Formula (2) may be determined based on the RSTDs corresponding to different cells measured by the terminal device. In some embodiments, the TA adjustment value and/or the TA may be determined according to Formula (3) below.

The TA adjustment value = (the RSTD corresponding to the second cell - the RSTD corresponding to the first cell)/the unit distance (Formula 3)

where, the second cell may be understood as the cell at which that the terminal device arrives after moving, such as the target cell (a new cell) after the terminal device performs the cell reselection or the cell handover. The first cell may be understood as the cell where the terminal device is located before moving, such as the source cell before the terminal device performs the cell reselection or the cell handover.

In some embodiments, the unit distance mentioned above may be associated with the subcarrier spacing. For example, the correlation between the unit distance and the subcarrier spacing may be found in Table 1 above, where the unit distance corresponding to the subcarrier spacing of 15 kHz is 78 meters.

In some embodiments, if the variation of the RSTD is determined based on the RSTDs corresponding to different cells measured by the terminal device, the unit distance mentioned above may correspond to the cell at which the terminal device arrives after moving. Taking the cell reselection from the first cell to the second cell by the terminal device as an example, the unit distance mentioned above may correspond to the second cell.

In some embodiments, when the terminal device determines the TA adjustment value and/or the TA based on the positioning related measurement amount such as the RSTD, the network device may not be able to determine whether the terminal device has adjusted the TA based on the positioning related measurement amount such as the RSTD reported by the terminal device. Therefore, as an implementation, when terminal device reports the positioning related measurement amount such as the RSTD to the network device, the network device may indicate the relevant information of the TA adjustment to the network device.

In some embodiments, the terminal device may indicate the relevant information of the TA adjustment to the cell where the terminal device is located before moving. Taking the cell reselection from the first cell to the second cell by the terminal device as an example, the terminal device may indicate the relevant information of the TA adjustment to the first cell.

As an implementation, the terminal device may send a second message to the network device to report the RSTD to the cell (such as the first cell) where the terminal device is located before moving. In some embodiments, the second message may carry second indication information to indicate the relevant information of the TA adjustment. For example, the second indication information may be configured to indicate one or more of the following: the TA adjustment value, an effective time of the adjusted TA, the adjusted TA, and identification information of the cell (such as the second cell) at which the terminal device arrives after moving. For example, the second indication information may include the TA adjustment value and the identification information of the cell at which the terminal device arrives after moving. Or, the second indication information may include the adjusted TA, the effective time of the adjusted TA, and the identification information of the cell at which the terminal device arrives after moving. Or, the second indication information may include the adjusted TA and the identification information of the cell at which the terminal device arrives after moving.

In some embodiments, the terminal device may report the RSTD to the cell (such as the first cell) where the terminal device is located before moving before the cell reselection. Or, if the cell reselection is performed after the terminal device reports the RSTD, and the terminal device determines to perform the cell reselection, the terminal device may notify the source cell of the relevant information for of the TA adjustment when reporting the RSTD.

In some embodiments, after reporting the RSTD or the TA adjustment information to the cell where the terminal device is located before moving (such as the first cell), the cell where the terminal device is located before moving may also notify the cell at which the terminal device arrives after moving (such as the second cell) of the TA adjustment information. Taking the cell reselection from the first cell to the second cell by the terminal device, and the relevant information of the TA adjustment being indicated by the second indication information as an example, in some embodiments, the first cell may send the second indication information to the second cell.

In some embodiments, the terminal device may indicate the relevant information of the TA adjustment to the cell at which the terminal device arrives after moving. Taking the cell reselection from the first cell to the second cell by the terminal device as an example, the terminal device may indicate the relevant information of the TA adjustment to the second cell.

As an implementation, the terminal device may send a third message to the network device to report the RSTD to the cell (such as the second cell) at which the terminal device arrives after moving. In some embodiments, the third message may carry third indication information to indicate the relevant information of the TA adjustment. For example, the third indication information may be configured to indicate one or more of the following: whether the terminal device has adjusted the TA, the TA adjustment value, and the adjusted TA. For example, the third indication information may include whether the terminal device has adjusted the TA and the TA adjustment value. Or, the third indication information may include whether the terminal device has adjusted the TA and the adjusted TA. Or, the third indication information may include the adjusted TA.

In some embodiments, the terminal device may report the RSTD to the cell (such as the second cell) at which the terminal device arrives after moving after the cell reselection. Or, if the cell reselection is performed before the terminal device reports the RSTD, the terminal device may notify the target cell of the relevant information of the TA adjustment when reporting the RSTD.

In the third embodiment, the terminal device may determine the TA adjustment value and/or the TA based on the RSTDs corresponding to different cells, ensuring that the terminal device may adjust the TA in time when the terminal device is in the RRC idle or the RRC inactive state, thereby improving the timeliness and flexibility of the TA adjustment.

## Fourth Embodiment: the first information being associated with the downlink synchronization time of a cell

In some embodiments, the first information may include a synchronization time difference of the downlink synchronization times measured by the terminal device at different times. For example, within a small cell, the terminal device may measure the downlink synchronization times at different times and determine the synchronization time difference based on the downlink synchronization times measured at different times. Afterwards, the terminal device may determine the TA adjustment value and/or the TA based on the synchronization time difference.

That is, the embodiments of the present disclosure may estimate the downlink synchronization times at different times. Based on the estimated synchronization time difference, the terminal device may obtain distance change information of the terminal device and thus determine whether to adjust the TA and the corresponding TA adjustment value and/or the TA. In some embodiments, the distance change information of the terminal device obtained by the terminal device based on the synchronization time difference meets the accuracy requirements for the TA adjustment.

In some embodiments, in the case where the first information includes the synchronization time difference of the downlink synchronization times measured by the terminal device at different times, the downlink synchronization time is for the same network device (or for the same cell). For example, a synchronization signal configured to measure the downlink synchronization time is sent by the same network device (or the same cell) at different times.

The embodiments of the present disclosure do not limit the synchronization signal configured to measure the downlink synchronization time. For example, the downlink synchronization time may be determined based on a measurement amount of the SSB, or the downlink synchronization time may be determined based on the measurement amounts of the synchronization signals in future communication systems.

In some embodiments, when the synchronization time difference of the downlink synchronization times measured by the terminal device at different times exceeds a certain threshold, the terminal device may consider it necessary to adjust the TA.

In some embodiments, the TA adjustment value and/or the TA may be determined based on the synchronization time difference (i.e., the synchronization time difference between the downlink synchronization times measured by the terminal device at different times) and the unit distance mentioned above. For example, the TA adjustment value may be determined according to Formula (4) below.

The TA adjustment value = the synchronization time difference/the unit distance (Formula 4)

In some embodiments, the synchronization time difference in the above formula may be determined based on the downlink synchronization times measured by the terminal device at different times.

In some embodiments, the unit distance mentioned above may be associated with the subcarrier spacing. For example, the correlation between the unit distance and the subcarrier spacing may be found in Table 1 above, where the unit distance corresponding to a subcarrier spacing of 15 kHz is 78 meters.

In some embodiments, if the synchronization time difference mentioned above is determined based on the downlink synchronization times measured by the terminal device at different times within the same cell, the unit distance mentioned above may correspond to the same cell. For example, if the synchronization time difference is determined based on the downlink synchronization times measured by the terminal device at different times in the first cell, the unit distance mentioned above corresponds to the first cell.

In some embodiments, the terminal device may not report the measurement results (or synchronization results) of the synchronization signal (the downlink reference signal) to the network device, for example, the terminal device may not report the synchronization results for the SSB to the network device. In this case, as a possible implementation, after adjusting the TA based on the synchronization time difference, the terminal device may transmit the uplink signal/channel based on the adjusted TA, and the network device may estimate the uplink signal/channel sent by the terminal device to determine the result of TA adjustment. For example, the network device may determine whether the terminal device has adjusted the TA based on the uplink signal/channel sent by the terminal device. Or, the network device may determine the TA adjustment value and/or the adjusted TA based on the uplink signal/channel sent by the terminal device.

In the fourth embodiment, the terminal device measures the synchronization signals at different times and adjusts the TA based on the synchronization time difference of the downlink synchronization times measured at different times, which can adjust the TA more accurately. For example, the terminal device determines the TA adjustment value and/or the TA based on the synchronization time difference of the downlink synchronization times measured at different times, which allows the TA adjustment value and/or the TA to be determined more accurately.

### Fifth Embodiment: the first information being associated with the downlink synchronization times of multiple cells

In some embodiments, the first information may include a time difference between the downlink synchronization times of different cells measured by the terminal device. For example, the first information may include the time difference between the downlink synchronization time of the first cell and the downlink synchronization time of the second cell. In some embodiments, after measuring the downlink synchronization times of different cells, the terminal device may determine the time difference of the downlink synchronization times of different cells based on the downlink synchronization time of different cells. Afterwards, the terminal device may determine the TA adjustment value and/or the TA based on the time difference.

That is, in the embodiments of the present disclosure, the terminal device may synchronously detect the downlink reference signals (such as the SSBs) of different cells, and determine the TA adjustment value and/or the TA based on the time difference of the downlink synchronization times of different cells.

In some embodiments, the technical solution of the fifth embodiment may be applied to scenarios where the terminal device moves between different cells; in other words, the technical solution of the fifth embodiment may be applied to scenarios where the terminal device moves across the cells. For example, the technical solution of the fifth embodiment may be applied to scenarios where the terminal device reselects from the first cell to the second cell. Or, the technical solution of the fifth embodiment may be applied to scenarios where the terminal device performs the handover from the first cell to the second cell.

Taking the cell reselection form the first cell to the second cell by the terminal device as an example, the terminal device may estimate the synchronization of the second cell during the cell reselection to obtain the downlink synchronization time of the second cell, determine the time difference between the downlink synchronization time of the first cell and the downlink synchronization time of the second cell, and thus determine the TA adjustment value and/or the TA based on the time difference.

In some embodiments, the downlink synchronization time of the cell is determined based on the measurement of the synchronization signal of the cell by the terminal device. Taking the cell reselection from the first cell to the second cell by the terminal device as an example, the downlink synchronization time of the first cell may be determined based on the measurement of the synchronization signal of the first cell by the terminal device, and the downlink synchronization time of the second cell may be determined based on the measurement of the synchronization signal of the second cell by the terminal device.

The embodiments of the present disclosure do not limit the synchronization signal configured to measure the downlink synchronization time. For example, the downlink synchronization time may be determined based on a SSB measurement, or the downlink synchronization time may be determined based on the measurement of the synchronization signals in future communication systems.

In some embodiments, when the time difference between the downlink synchronization times of different cells measured by the terminal device exceeds a certain threshold, the terminal device may consider that the TA needs to be adjusted.

In some embodiments, the TA adjustment value and/or the TA may be determined based on the above time difference (i.e., the time difference between the downlink synchronization times of difference cells by the terminal device).

In some embodiments, the TA adjustment value and/or the TA may be determined based on one or more of the following: the time difference between the measured downlink synchronization times of different cells, the transmission times of the downlink reference signals of different cells, and the unit distance.

In some embodiments, the transmission time of the downlink reference signal of the cell may include the transmission times of the downlink reference signals of different cells, which can be configured to determine the offset between the transmission times of the downlink reference signals of the different cells. In other words, in some embodiments, the TA adjustment value and/or the TA may be determined based on one or more of the following: the time difference between the measured downlink synchronization times of different cells, the offset between the transmission times of the downlink reference signals of different cells, and the unit distance. Taking the terminal device moving from the first cell to the second cell as an example, the TA adjustment value and/or the TA may be determined based on one or more of the following: the time difference between the downlink synchronization time of the first cell and the downlink synchronization time of the second cell, the offset between the transmission time of the downlink reference signal of the first cell and the transmission time of the downlink reference signal of the second cell, and the unit distance.

Taking the terminal device moving from the first cell to the second cell as an example, the TA adjustment value may be determined according to Formula (5) below.

$$\text{The TA adjustment value} = (t1-t0-d)/\text{the unit distance} \qquad \text{(Formula 5)}$$

where, t1 represents the downlink synchronization time of the second cell, t0 represents the downlink synchronization time of the first cell, and d represents the offset between the transmission times of the downlink reference signals of the first cell and the second cell. For ease of understanding, FIG. 5 shows the downlink synchronization times of different cells measured by the terminal device and the offset between the transmission times of the downlink reference signals of different cells.

In some embodiments, t1-t0-d in the above formula may represent a transmission time difference of the second cell relative to the first cell. That is, the transmission time difference of the second cell relative to the first cell may be equal to a difference between signal arrival times of the second cell and the first cell minus a transmission time difference of the first cell.

In some embodiments, the unit distance may be associated with a subcarrier spacing. For example, the correlation between unit distance and subcarrier spacing may be found in Table 1 above, where the unit distance corresponding to a subcarrier spacing of 15 kHz is 78 meters.

In some embodiments, if the above time difference is determined based on the downlink synchronization times of different cells measured by the terminal device, the unit distance may correspond to the cell reached by the terminal device after moving. Taking the cell reselection from the first cell to the second cell by the terminal device as an example, the unit distance may correspond to the second cell.

In some embodiments, when the terminal device moves from the first cell to the second cell, the TA adjustment value and/or the TA may be determined by the terminal device based on the downlink synchronization time of the second cell. Or, in some embodiments, the uplink timing of the terminal device may be determined based on the TA and the downlink reference time. When the terminal device moves from the first cell to the second cell, the terminal device may use the downlink synchronization time of the second cell as the downlink reference time, and then determine the TA adjustment value and/or the TA based on the downlink reference time.

In some embodiments, the terminal device may not report the measurement result (or synchronization result) of the synchronization signal (or the downlink reference signal) to the network device, for example, the terminal device may not report the synchronization result for the SSB to the network device. In this case, as a possible implementation, the terminal device may adjust the TA based on the time difference between the downlink synchronization times of different cells, and then transmit the uplink signal/channel based on the adjusted TA. The network device may estimate the uplink signal/channel sent by the terminal device to determine the result of TA adjustment. For example, the network device may determine whether the terminal device has adjusted the TA based on the uplink signal/channel sent by the terminal device. Or, the network device may determine the TA adjustment value and/or the adjusted TA based on the uplink signals/channel sent by the terminal device.

In the fifth embodiment, the terminal device measures the synchronization signals of different cells and adjusts the TA based on the time difference between the measured downlink synchronization times of different cells, which adjusts the TA more accurately. For example, the terminal device determines the TA adjustment value and/or the TA based on the time difference between the measured downlink synchronization times of different cells, which determines the TA adjustment value and/or the TA more accurately.

## Sixth Embodiment: the first information being associated with the fingerprint information collected by the terminal device

The terminal device may measure the downlink reference signals sent by different network devices to collect the corresponding downlink measurement amounts of different network devices. For example, the terminal device may collect the measurement amounts such as the RSRPs or the RSSIs corresponding to different network devices (i.e., for the downlink reference signals sent by different network devices, the terminal device respectively collects the RSRP and the RSSI, etc.).

When the terminal device is in different locations, the downlink measurement amounts collected by the terminal device (such as the RSRP or RSSI,) may be different. In this case, the downlink measurement amounts corresponding to different network devices collected by the terminal device at different locations respectively have a feature like "fingerprint", therefore, such information may also be referred to as the fingerprint information.

That is, the fingerprint information collected by the terminal device may refer to the information formed by the downlink measurement amounts corresponding to different network devices collected by the terminal device at different locations.

In some embodiments, the terminal device may determine the TA adjustment value and/or the TA based on the fingerprint information mentioned above.

The embodiments of the present disclosure do not limit the method of obtaining the fingerprint information mentioned above. In some embodiments, the above fingerprint information may be collected by the terminal device. In some embodiments, the fingerprint information mentioned above may be sent to the terminal device by the network device or the positioning server.

In some embodiments, the fingerprint information mentioned above may include a relatively large amount of data. In some embodiments, if the fingerprint information includes a relatively large amount of data, the network device or the positioning server may compress the fingerprint information and send the compressed fingerprint information to the terminal device; in other words, the network device or the positioning server may send the compressed fingerprint information to the terminal device.

On the basis of the first information as mentioned above, the following provides an exemplary introduction to the operations and process of the embodiments of the present disclosure. It should be noted that,

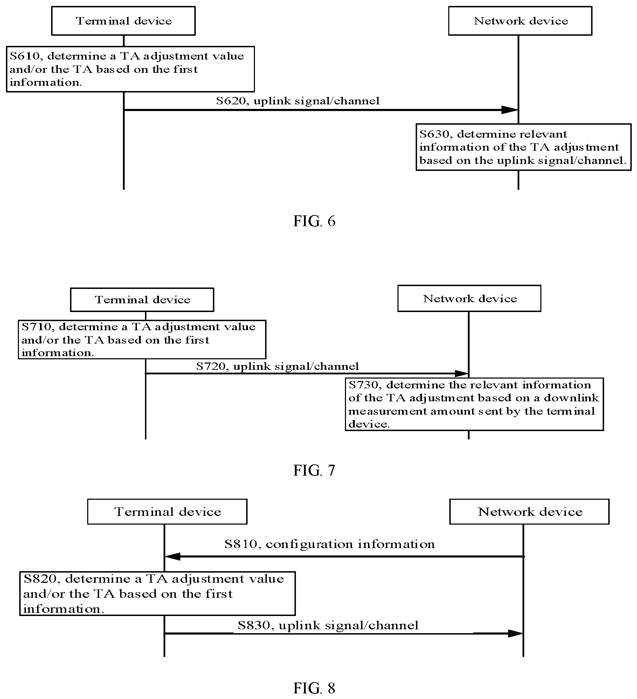

FIG. 6 is a schematic flowchart of a wireless communication method provided in another embodiment of the present disclosure. The method shown in FIG. 6 is introduced from the perspective of interaction between the terminal device and the network device. The method shown in FIG. 6 may include operations S610 to S630.

In S610, the terminal device determines a TA adjustment value and/or a TA based on first information.

In S620, the terminal device sends an uplink signal/channel to the network device based on the TA adjustment value and/or the TA.

For the relevant introduction of the operations S610 and S620, please refer to the previous introduction of the operations S310 and S320, which is not be repeated here.

In S630, the network device determines relevant information of a TA adjustment based on the uplink signal/-channel.

The embodiments of the present disclosure do not limit the relevant information of the TA adjustment. For example, the network device may determine one or more of the following based on the uplink signal/channel: whether the terminal device has adjusted the TA, the TA adjustment value, and an adjusted TA, etc.

In some embodiments, the network device may determine whether the terminal device has adjusted the TA based on the uplink signal/channel. For example, if the network device determines that the terminal device has adjusted the TA based on the uplink signal/channel, the network device may also need to perform subsequent processing according to the adjusted TA. Or, if the network device determines that the terminal device has not adjusted the TA based on the uplink signal/channel, the network device may continue to perform subsequent processing according to an original TA.

In some embodiments, the network device may determine the TA adjustment value and/or the TA based on the uplink signal/channel. For example, in the case where the network device determines that the terminal device has adjusted the TA, the network device may further determine the TA adjustment value and/or the adjusted TA based on the uplink signal/channel sent by the terminal device based on the adjusted TA.

In some embodiments, the uplink signal/channel sent by the terminal device may be a SRS. In other embodiments, the uplink signal/channel sent by the terminal device may also be other uplink reference signals, which is not limited thereto.

In some embodiments, if the first information is associated with downlink synchronization related information and/or a downlink reference time, the network device may determine the relevant information of the TA adjustment based on the uplink signal/channel sent by the terminal device.

In some embodiments, if the terminal device does not report a measurement result to the network device, the network device may determine the relevant information of the TA adjustment based on the uplink signal/channel sent by the terminal device. In other words, if the network device determines the relevant information of the TA adjustment based on the uplink signal/channel sent by the terminal device, the determination of the relevant information of the TA adjustment may not rely on the reporting of a downlink measurement amount by the terminal device.

For example, in the scenarios of the fourth and fifth Embodiments, the network device may determine the relevant information of the TA adjustment based on the uplink signal/channel.

FIG. 7 is a schematic flowchart of a wireless communication method provided in yet another embodiment of the present disclosure. The method shown in FIG. 7 is introduced from the perspective of interaction between the terminal device and the network device. The method shown in FIG. 7 may include operations S710 to S730.

In S710, the terminal device determines a TA adjustment value and/or a TA based on first information.

In S720, the terminal device sends an uplink signal/channel to the network device based on the TA adjustment value and/or the TA.

For the relevant introduction of the operations S710 and S720, please refer to the previous introduction of the operations S310 and S320, which is not be repeated here.

In S730, the network device determines relevant information of a TA adjustment based on a downlink measurement amount sent by the terminal device.

The embodiments of the present disclosure do not limit the relevant information of the TA adjustment. For example, the network device may determine one or more of the following based on the downlink measurement amount sent by the terminal device: whether the terminal device has adjusted the TA, the TA adjustment value, and an adjusted TA, etc.

In some embodiments, the network device may determine whether the terminal device has adjusted the TA based on the downlink measurement amount sent by the terminal device. For example, if the network device determines that the terminal device has adjusted the TA based on the downlink measurement amount sent by the terminal device, the network device may also need to perform subsequent processing according to the adjusted TA. Or, if the network device determines that the terminal device has not adjusted the TA based on the downlink measurement amount sent by the terminal device, the network device may continue to perform subsequent processing according to an original TA.

In some embodiments, the network device may determine the TA adjustment value and/or the TA based on the downlink measurement amount sent by the terminal device. For example, if the network device determines that the terminal device has adjusted the TA, the network device may further determine the TA adjustment value and/or the adjusted TA based on the downlink measurement amount sent by the terminal device.

In some embodiments, the downlink measurement amount sent by the terminal device may include a RSRP. In some embodiments, the downlink measurement amount sent by the terminal device may include a RSTD. However, the embodiments of the present disclosure are not limited thereto. For example, the downlink measurement amount sent by the terminal device may also be other downlink measurement amounts related to a cell signal quality (such as a RSSI, a RSRQ, or a SINR.) or other positioning related downlink measurement amounts.

In some embodiments, if the first information is associated with the downlink measurement amount, the network device may determine the relevant information of the TA adjustment based on the downlink measurement mount sent by the terminal device.

In some embodiments, if the terminal device reports the downlink measurement amount to the network device, the network device may determine the relevant information of the TA adjustment based on the downlink measurement amount sent by the terminal device.

For example, in the scenarios of the first to third embodiments, the network device may determine the relevant information of the TA adjustment based on the downlink measurement amount.

In some embodiments, in addition to determining the relevant information of the TA adjustment based on the uplink signal/channel sent by the terminal device or the downlink measurement amount sent by the terminal device, the network device may also determine the relevant information of the TA adjustment based on the relevant information of the TA adjustment sent by the terminal device. For example, when the terminal device determines the TA adjustment value and/or the TA based on the RSTD, the terminal device may report the relevant information of the TA adjustment to the network device. In this way, the network device may determine the relevant information of the TA adjustment based on the relevant information of the TA adjustment sent by the terminal device.

For example, in the scenarios of the first to sixth embodiments, the network device may determine the relevant information of the TA adjustment based on the relevant information of the TA adjustment sent by the terminal device.

In some embodiments, the terminal device actively adjusts the TA when the terminal device has the ability to actively adjust the TA. As an implementation, the network device may configure an active TA adjustment function for the terminal device. As another implementation, a protocol may stipulate that the terminal device has the ability to actively adjust the TA, etc., which is introduced below in conjunction with FIG. 8.

FIG. 8 is a schematic flowchart of a wireless communication method provided in a further embodiment of the present disclosure. The method shown in FIG. 8 may include operations S810 to S830.

In S810, the network device sends configuration information to the terminal device. The configuration information may be configured to configure the terminal device to actively adjust a TA. Or, the configuration information may be configured to enable an active TA adjustment function for the terminal device.

The embodiments of the present disclosure do not limit the indication method of the configuration information. For example, the configuration information may be indicated by the network device through a high-level signaling (such as a RRC signaling). Or, the configuration information may also be indicated through a medium access control element (MAC CE) or downlink control information (DCI).

In some embodiments, the configuration information may correspond to all the terminal devices within the coverage range of the network device, for example, the network device may indicate the configuration information through broadcasting. In some embodiments, the configuration information may correspond to one or some terminal devices (particular terminal devices), for example, the network device may indicate the configuration information through a dedicated signaling. As an implementation, the network device may send the configuration information to a single terminal device or a group of terminal devices through the dedicated signaling.

In S820, the terminal device determines a TA adjustment value and/or the TA based on first information.

In S830, the terminal device sends an uplink signal/channel to the network device based on the TA adjustment value and/or the TA.

For the relevant introduction of the operations S820 and S830, please refer to the previous introduction of the operations S310 and S320, which is not repeated here for simplicity.

For ease of understanding, the following provides a brief introduction to the process operations of the present embodiment from the perspective of the operations to be executed on the terminal device and the network device, respectively.

For the terminal device, the terminal device may perform one or more of operations 1 to 5 below.

1, the terminal device is configured to actively adjust the TA; in other words, the terminal device has an enabled active TA adjustment function.

2, the terminal device measures the downlink reference signal sent by the network device.

3a, the terminal device reports the measurement amount.

3b, the terminal device determines the TA adjustment value and/or the TA based on the measurement amount.

4, the terminal device adjusts the TA.

5, the terminal device performs uplink transmission according to the adjusted TA.

It should be noted that the operations 3a and 3b are not executed in any particular order. For example, the operation 3a may be executed before the operation 3b, after the operation 3b, or simultaneously with the operation 3b.

It should also be noted that the terminal device may perform some or all of the operations mentioned above. For example, the terminal device may perform the operations 1, 2, 3b, 4, and 5. Or, the terminal device may perform the operations 2, 3a, 3b, 4, 5, and so on.

For the network device, the network device may perform one or more of operations 1 to 4 below.

1, the network device configures the terminal device to actively adjust the TA; in other words, the network device enables the active TA adjustment function of the terminal device.

2, the network device receives the measurement amount reported by the terminal device.

3, the network device determines the TA adjustment value and/or the TA based on the measurement amount or the uplink signal/channel.

4, the network device performs subsequent processing according to the adjusted TA.

It should be noted that the network device may perform some or all of the operations mentioned above. For example, the network device may perform the operations 1, 3, and 4. Or, the terminal device may perform the operations 1, 2, 3, and so on.

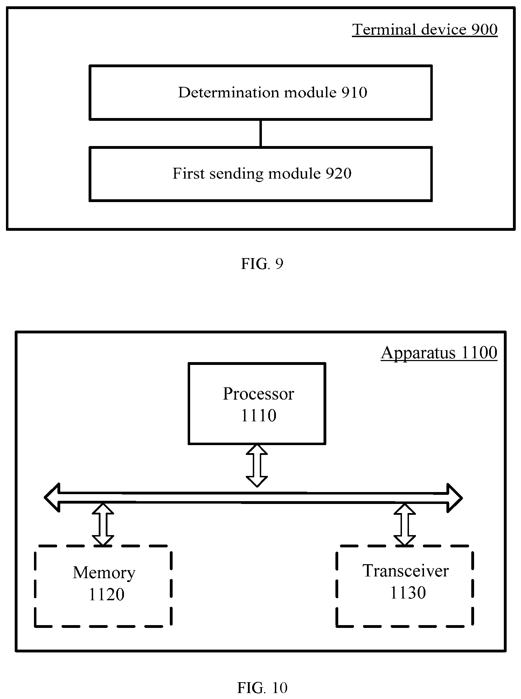

The method embodiments of the present disclosure are described in detail above with reference to FIG. 1 to FIG. 8. The apparatus embodiments of the present disclosure are described in detail below with reference to FIG. 9 to FIG. 11. It should be understood that the descriptions of the method embodiments correspond to the descriptions of the apparatus embodiments, therefore, the parts not described in detail may refer to the previous method embodiments.

FIG. 9 is a schematic structural diagram of a terminal device according to an embodiment of the present disclosure. A terminal device 900 shown in FIG. 9 may include a determination module 910 and a first sending module 920.

The determination module 910 may be configured to determine a TA adjustment value and/or a TA based on first information.

The first sending module 920 may be configured to adjust the TA value and/or send an uplink signal/channel to the network device based on the TA, where the first information is associated with one or more of the following: a downlink measurement amount, downlink synchronization related information, a downlink reference time, and fingerprint information collected by the terminal device.

In some embodiments, the TA includes at least one of the following: a time advance indication and an advance time for uplink transmission relative to the downlink reference signal by the terminal device.

In some embodiment, the first information includes one or more of the following: a RSRP, a RSTD, a SSB, s downlink synchronization time of one or more cells, the downlink reference time of one or more cells, and the fingerprint information collected by the terminal device.

In some embodiments, the first information includes a variation of the RSRP.

In some embodiments, the TA adjustment value and/or the TA are determined based on the variation of the RSRP and second information indicating a relationship between the variation of the RSRP and a TA change ratio.

In some embodiments, the second information includes multiple types of information, which are configured to indicate various relationships between the variation of the RSRP and the TA change ratio, and correspond to multiple area locations within a coverage range of the network device.

In some embodiments, the second information may be sent to the terminal device from the network device or a positioning server, or predefined in a protocol.

In some embodiments, the second information is associated with one of the following: a service cell of the terminal device, the service cell and a neighboring cell of the terminal device, a validity area of the terminal device, and the uplink transmission validity area of the terminal device.

In some embodiments, the first information includes a variation of the RSTD.

In some embodiments, the terminal device further includes a second sending module configured to send a first message to the network device. The first message is configured to report the RSTD, and the first message includes first indication information which is configured to indicate one or more of the following: whether the terminal device has adjusted the TA, the TA adjustment value, and the TA.

In some embodiments, the TA adjustment value and/or the TA are determined based on the variation of the RSTD and a unit distance, and the unit distance is associated with a subcarrier spacing.

In some embodiments, the TA adjustment value satisfies the following formula: the TA adjustment value = the variation of the RSTD/the unit distance.

In some embodiments, the terminal device reselects from a first cell to a second cell, and the unit distance corresponds to the second cell.

In some embodiments, the terminal device reselects from the first cell to the second cell, and the TA adjustment value and/or the TA is the TA adjustment value and/or the TA correspond to the second cell.

In some embodiments, the terminal device further includes a third sending module configured to send a second message to the network device. The second message is configured to report the RSTD to the first cell, and the second message further includes second indication information which is configured to indicate one or more of the following: the TA adjustment value, an effective time of the TA, the TA, and the identification information of the second cell.

In some embodiments, the RSTD is reported to the first cell before the cell reselection.

In some embodiments, the terminal device further includes a fourth sending module configured to send a third message to the network device. The third message is configured to report the RSTD to the second cell, and the third message further includes third indication information, the third indication information which is configured to indicate one or more of the following: whether to adjust the TA, the TA adjustment value, and the TA.

In some embodiments, the RSTD is reported to the second cell after the cell reselection.

In some embodiments, the first information includes a synchronization time difference between the downlink synchronization times measured by the terminal device at different times.

In some embodiments, the TA adjustment value satisfies the following formula: the TA adjustment value = the synchronization time difference/the unit distance, where the unit distance is associated with the subcarrier spacing.

In some embodiments, the downlink synchronization time is determined based on a SSB measurement.

In some embodiments, the first information includes a time difference between a downlink synchronization time of the first cell and a downlink synchronization time of the second cell.

In some embodiments, the TA adjustment value and/or the TA are determined based on the time difference and an offset between a transmission time of the downlink reference signal of the first cell and a transmission time of the downlink reference signal of the second cell.

In some embodiments, the TA adjustment value satisfies the following formula: the TA adjustment value = (t1-t0-d)/the unit distance, where t1 represents the downlink synchronization time of the second cell, t0 represents the downlink synchronization time of the first cell, d represents the offset, and the unit distance is determined based on the subcarrier spacing.

In some embodiments, if the terminal device reselects from the first cell to the second cell, the TA is determined based on the downlink synchronization time of the second cell.

In some embodiments, the downlink synchronization time of the first cell is determined based on the SSB measurement of the first cell, and/or the downlink synchronization time of the second cell is determined based on the SSB measurement of the second cell.

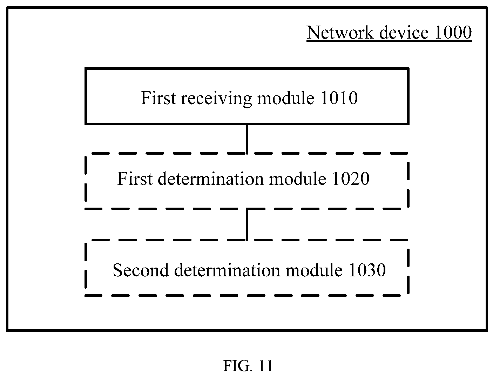

In some embodiments, the determination module 910 may be a processor 1110, and the first sending module 920 may be a transceiver 1130. The terminal device 900 may further include a memory 1120, as shown in FIG. 11.

FIG. 10 is a schematic structural diagram of a network device provided in the embodiments of the present disclosure. The network device 1000 shown in FIG. 10 may include a first receiving module 1010.

The first receiving module 1010 may be configured to receive an uplink signal/channel sent by the terminal device. The uplink signal/channel is transmitted based on a TA of the terminal device, and the TA and/or a TA adjustment value of the TA are determined by the terminal device based on first information, which is associated with one or more of the following: a downlink measurement amount, downlink synchronization related information, a downlink reference time, and fingerprint information collected by the terminal device.

In some embodiments, the TA includes at least one of the following: a time advance indication, and an advance time for uplink transmission relative to a downlink reference signal by the terminal device.

In some embodiments, the first information includes one or more of the following: a RSRP, a RSTD, a SSB, a downlink synchronization time of one or more cells, the downlink reference time of one or more cells, and the fingerprint information collected by the terminal device.

In some embodiments, the network device further includes a first determination module 1020 configured to determine that the terminal device has adjusted the TA based on the uplink signal/channel, and/or, a second determination module 1030 configured to determine the TA adjustment value and/or the TA based on the uplink signal/channel.

In some embodiments, the uplink signal/channel is a SRS.

In some embodiments, the network device further includes a third determination module configured to determine whether the terminal device has adjusted the TA based on the downlink measurement amount sent by the terminal device, and/or, a fourth determination module configured to determine the TA adjustment value and/or the TA based on the downlink measurement amount.

In some embodiments, the downlink measurement amount includes the RSRP.

In some embodiments, the first information includes a variation of the RSRP.

In some embodiments, the TA adjustment value and/or the TA are determined based on the variation of the RSRP and second information indicating a relationship between the variation of the RSRP and a TA change ratio.

In some embodiments, the second information includes multiple types of information, which are configured to indicate various relationships between the variation of the RSRP and the TA change ratio, and correspond to multiple area locations within a coverage range of the network device.

In some embodiments, the second information may be sent to the terminal device from the network device or a positioning server, or predefined in a protocol.

In some embodiments, the second information is associated with one of the following: a service cell of the terminal device, the service cell and a neighboring cell of the terminal device, a validity area of the terminal device, and an uplink transmission validity area of the terminal device.

In some embodiments, the first information includes a variation of the RSTD.

In some embodiments, the network device further includes a second receiving module configured to receive a first message sent by the terminal device. The first message is configured to report the RSTD, and the first message includes first indication information to indicate one or more of the following: whether the terminal device has adjusted the TA, the TA adjustment value, and the TA.

In some embodiments, the TA adjustment value and/or the TA are determined based on the variation of the RSTD and a unit distance which is associated with a subcarrier spacing.

In some embodiments, the TA adjustment value satisfies the following formula: the TA adjustment value = the variation of the RSTD/the unit distance.

In some embodiments, the terminal device reselects from the first cell to the second cell, and the unit distance corresponds to the second cell.

In some embodiments, the terminal device reselects from the first cell to the second cell, and the TA adjustment value and/or the TA correspond to the second cell.

In some embodiments, the network device further includes a third receiving module configured to receive a second message sent by the terminal device. The second message is configured to report the RSTD to the first cell, and the second message further includes second indication information to indicate one or more of the following: the TA adjustment value, an effective time of the TA, the TA, and identification information of the second cell.

In some embodiments, the RSTD is reported to the first cell before the cell reselection.

In some embodiments, the network device further includes a sending module configured to send the second indication information to the second cell.

In some embodiments, the network device further includes a fourth receiving module configured to receive a third message sent by the terminal device. The third message is configured to report the RSTD to the second cell, and the third message further includes third indication information to indicate one or more of the following: whether to adjust the TA, the TA adjustment value, and the TA.

In some embodiments, the RSTD is reported to the second cell after the cell reselection.

In some embodiments, the first information includes a synchronization time difference between the downlink synchronization times measured by the terminal device at different times.

In some embodiments, the TA adjustment value satisfies the following formula: the TA adjustment value = the synchronization time difference/the unit distance, wherein the unit distance is associated with the subcarrier spacing.

In some embodiments, the downlink synchronization time is determined based on the SSB measurement.

In some embodiments, the first information includes a time difference between the downlink synchronization time of the first cell and the downlink synchronization time of the second cell.

In some embodiments, the TA adjustment value and/or the TA are determined based on the time difference and an offset between a transmission time of the downlink reference signal of the first cell and a transmission time of the downlink reference signal of the second cell.

In some embodiments, the TA adjustment value satisfies the following formula: the TA adjustment value = (t1-t0-d)/the unit distance; where, t1 represents the downlink synchronization time of the second cell, t0 represents the downlink synchronization time of the first cell, d represents the offset, and the unit distance is determined based on the subcarrier spacing.

In some embodiments, if the terminal device reselects from the first cell to the second cell, the TA is determined based on the downlink synchronization time of the second cell.

In some embodiments, the downlink synchronization time of the first cell is determined based on the SSB measurement of the first cell, and/or the downlink synchronization time of the second cell is determined based on the SSB measurement of the second cell.

In some embodiments, the first receiving module 1010 may be a transceiver 1130. The network device 1000 may further include a processor 1110 and a memory 1120, as shown in FIG. 11.

FIG. 11 is a schematic structural diagram of an apparatus for wireless communication according to an embodiment of the present disclosure. The dashed line in FIG. 11 indicates that the unit or module is optional. An apparatus 1100 may be configured to perform the method described in the above method embodiments. The apparatus 1100 may be a chip, a terminal device, or a network device.

The apparatus 1100 may include one or more processors 1110. The processor 1110 may allow the apparatus 1100 to perform the methods described in the foregoing method embodiments. The processor 1110 may be a general-purpose processor or a dedicated processor. For example, the processor may be a central processing unit (CPU). Alternatively, the processor may be another general-purpose processor, a digital signal processor (DSP), an application specific integrated circuit (ASIC), a field-programmable gate array (FPGA) or another programmable logic device, a discrete gate or transistor logic device, or a discrete hardware component. The general-purpose processor may be a microprocessor, or the processor may be any conventional processor or the like.

The apparatus 1100 may further include one or more memories 1120. The memory 1120 stores a program that may be executed by the processor 1110 to cause the processor 1110 to perform the methods described in the previous method embodiments. The memory 1120 may be independent of the processor 1110 or integrated into the processor 1110.

The apparatus 1100 may further include a transceiver 1130. The processor 1110 may communicate with other devices or chips through the transceiver 1130. For example, the processor 1110 may send data to other devices or chips or may receive data from other devices or chips through the transceiver 1130.

An embodiment of the present disclosure further provides a computer-readable storage medium for storing a program. The computer-readable storage medium may be applied to the terminal device or the network device provided in the embodiments of the present disclosure, and the program causes the computer to perform the methods executed by the terminal device or the network device in various embodiments of the present disclosure.

An embodiment of the present disclosure further provides a computer program product. The computer program product includes a program. The computer program product may be applied to the terminal device or the network device provided in the embodiments of the present disclosure, and the program causes a computer to perform the methods executed by the terminal device or the network device in various embodiments of the present disclosure.

An embodiment of the present disclosure further provides a computer program. The computer program may be applied to the terminal device or the network device provided in the embodiments of the present disclosure, and the computer program causes a computer to perform the methods executed by the terminal device or the network device in various embodiments of the present disclosure.

It should be understood that the terms "system" and "network" in the present disclosure may be used interchangeably. In addition, the terms used in the present disclosure are only for the purpose of explaining the specific embodiments of the present disclosure, and are not intended to limit the present disclosure. The terms "first", "second", "third", "fourth", and the like used in the specification, claims, and accompanying drawings of the present disclosure are intended to distinguish between different objects, rather than to describe a specific order. In addition, the terms "include" and "have" and any variations thereof, are intended to cover non-exclusive inclusions.

In the embodiments of the present disclosure, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In the embodiments of the present disclosure, the term "correspond" may mean that there is a direct or indirect correspondence between the two, or may mean that there is an association relationship between the two, or may mean that there is a relationship such as indicating and being indicated, or configuring and being configured.

In the embodiments of the present disclosure, the term "include" may refer to direct or indirect inclusion. Optionally, the term "include" mentioned in the embodiments of the present disclosure can be replaced with "indicate" or "be used for determining". For example, A includes B, which can be replaced with A indicates B, or A is used for determining B.

In the embodiments of the present disclosure, "predefined" or "pre-configured" may be implemented by pre-storing corresponding code, tables, or other forms that may be configured to indicate related information in devices (for example, including a UE and a network device), and a specific implementation thereof is not limited in the present disclosure. For example, being predefined may refer to being defined in a protocol.

In the embodiments of the present disclosure, the "protocol" may refer to a standard protocol in the communications field, and may include, for example, an LTE protocol, an NR protocol, and a related protocol applied to a future communications system, which is not limited in the present disclosure.

In the embodiments of the present disclosure, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of the present disclosure, sequence numbers of the foregoing processes do not mean execution sequences. The execution sequences of the processes should be determined according to functions and internal logic of the processes, and should not be construed as any limitation on the implementation processes of embodiments of the present disclosure.

In several embodiments provided in the present disclosure, it should be understood that, the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected according to actual requirements to achieve the objectives of the solutions in embodiments.

In addition, functional units in embodiments of the present disclosure may be integrated into one processing unit, or each of the units may exist alone physically, or two or more units may be integrated into one unit.

All or some of the foregoing embodiments may be implemented by using software, hardware, firmware, or any combination thereof. When software is configured to implement embodiments, the foregoing embodiments may be implemented completely or partially in a form of a computer program product. The computer program product includes one or more computer instructions. When the computer program instructions are loaded and executed on a computer, the procedures or functions according to embodiments of the present disclosure are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A wireless communication method, comprising:

   determining, by a terminal device, a timing advance (TA) adjustment value and/or a TA based on first information;
   sending, by the terminal device, an uplink signal/channel to a network device based on the TA adjustment value and/or the TA;
   wherein the first information is associated with one or more of the following:

      a downlink measurement amount;

downlink synchronization related information;
a downlink reference time; and
fingerprint information collected by the terminal device.

2. The method according to claim 1, wherein the TA comprises at least one of the following:

a time advance indication, and
an advance time for uplink transmission relative to a downlink reference signal by the terminal device.

3. The method according to claim 1 or 2, wherein the first information comprises one or more of the following:

a reference signal received power (RSRP);
a reference signal time difference (RSTD);
a synchronization signal block (SSB);
a downlink synchronization time of one or more cells;
a downlink reference time of one or more cells; and
the fingerprint information collected by the terminal device.

4. The method according to any one of claims 1 to 3, wherein the first information includes a variation of a RSRP.

5. The method according to claim 4, wherein the TA adjustment value and/or the TA are determined based on the variation of the RSRP and second information which is configured to indicate a relationship between the variation of the RSRP and a TA change ratio.

6. The method according to claim 5, wherein the second information comprises multiple types of information, which are configured to respectively indicate various relationships between the variation of the RSRP and the TA change ratio, and correspond to multiple area locations within a coverage range of the network device.

7. The method according to claim 5 or 6, wherein the second information is sent to the terminal device by the network device or a positioning server, or is predefined in a protocol.

8. The method according to any one of claims 5 to 7, wherein the second information is associated with one of the following:

a service cell of the terminal device;
the service cell and a neighboring cell of the terminal device;
a validity area of the terminal device; and
an uplink transmission validity area of the terminal device.

9. The method according to any one of claims 1 to 3, wherein the first information comprises a variation of a RSTD.

10. The method according to claim 9, further comprising:
sending, by the terminal device, a first message to the network device, wherein the first message is configured to report the RSTD and the first message comprises first indication information to indicate one or more of the following:

whether the terminal device has adjusted the TA;
the TA adjustment value; and
the TA.

11. The method according to claim 9 or 10, wherein the TA adjustment value and/or the TA are determined based on the variation of the RSTD and a unit distance associated with a subcarrier spacing.

12. The method according to claim 11, wherein the TA adjustment value satisfies the following formula:
the TA adjustment value = the variation of the RSTD/the unit distance.

13. The method according to claim 11 or 12, wherein the terminal device reselects from a first cell to a second cell, and the unit distance corresponds to the second cell.

14. The method according to claim 9, wherein the terminal device reselects from a first cell to a second cell, and the TA adjustment value and/or the TA correspond to the second cell.

15. The method according to claim 14, further comprising:
sending, by the terminal device, a second message to the network device, wherein the second message is configured to report the RSTD to the first cell and the second message comprises second indication information to indicate one or more of the following:

the TA adjustment value;
an effective time of the TA;
the TA; and
identification information of the second cell.

16. The method according to claim 15, wherein the RSTD is reported to the first cell before a cell reselection.

17. The method according to claim 14, further comprising:
sending, by the terminal device, a third message to the network device, wherein the third message is configured to report the RSTD to the second cell and the third message comprises third indication information configured to indicate one or more of the following:

whether to adjust the TA;
the TA adjustment value; and
the TA.

18. The method according to claim 17, wherein the RSTD is reported to the second cell after a cell reselection.

19. The method according to any one of claims 1 to 3, wherein the first information comprises a synchronization time difference between downlink synchronization times measured by the terminal device at different times.

20. The method according to claim 19, wherein the TA adjustment value satisfies the following formula:

$$\text{the TA adjustment value} = \text{the synchronization time difference}/\text{a unit distance};$$

wherein the unit distance is associated with a subcarrier spacing.

21. The method according to claim 19 or 20, wherein the downlink synchronization time is determined based on a SSB measurement.

22. The method according to any one of claims 1 to 3, wherein the first information comprises a time difference between a downlink synchronization time of a first cell and a downlink synchronization time of a second cell.

23. The method according to claim 22, wherein the TA adjustment value and/or the TA are determined based on the time difference and an offset between a transmission time of the downlink reference signal of the first cell and a transmission time of the downlink reference signal of the second cell.

24. The method according to claim 23, wherein the TA adjustment value satisfies the following formula:

$$\text{the TA adjustment value} = (t1\text{-}t0\text{-}d)/\text{the unit distance};$$

wherein t1 represents the downlink synchronization time of the second cell, t0 represents the downlink synchronization time of the first cell, d represents the offset, and the unit distance is determined based on a subcarrier spacing.

25. The method according to any one of claims 22 to 24, wherein in a case that the terminal device reselects from the first cell to the second cell, the TA is determined based on the downlink synchronization time of the second cell.

26. The method according to any one of claims 22 to 25, wherein the downlink synchronization time of the first cell is determined based on a SSB measurement of the first cell; and/or

the downlink synchronization time of the second cell is determined based on a SSB measurement of the second cell.

27. A wireless communication method comprising:

receiving, by a network device, an uplink signal/channel sent by a terminal device;
wherein the uplink signal/channel is transmitted based on a timing advance (TA) of the terminal device, and the TA and/or a TA adjustment value of the TA are determined by the terminal device based on first information associated with one or more of the following:

a downlink measurement amount;
downlink synchronization related information;
a downlink reference time; and
fingerprint information collected by the terminal device.

28. The method according to claim 27, wherein the TA comprises at least one of the following:

a time advance indication; and
an advance time for uplink transmission relative to a downlink reference signal by the terminal device.

29. The method according to claim 27 or 28, wherein the first information comprises one or more of the following:

a reference signal received power (RSRP);
a reference signal time difference (RSTD);
a synchronization signal block (SSB);
a downlink synchronization time of one or more cells;
a downlink reference time for the one or more cells; and
the fingerprint information collected by the terminal device.

30. The method according to any one of claims 27 to 29, further comprising:

determining, by the network device, whether the terminal device has adjusted the TA based on the uplink signal/channel; and/or
determining, by the network device, the TA adjustment value and/or the TA based on the uplink signal/channel.

31. The method according to claim 30, wherein the uplink signal/channel is a sounding reference signal (SRS).

32. The method according to any one of claims 27 to 29, further comprising:

determining, by the network device, whether the terminal device has adjusted the TA based on a downlink measurement amount sent by the terminal device; and/or
determining, by the network device, the TA adjustment value and/or the TA based on the downlink measurement amount.

33. The method according to claim 32, wherein the downlink measurement amount comprises a RSRP.

34. The method according to any one of claims 27 to 33, wherein the first information comprises a variation of a RSRP.

35. The method according to claim 34, wherein the TA adjustment value and/or the TA are determined based on the variation of the RSRP and second information, and the second information is configured to indicate a relationship between the variation of the RSRP and a TA change ratio.

36. The method according to claim 35, wherein the second information comprises multiple types of information, which are configured to respectively indicate various relationships between the variation of the RSRP and the TA change ratio, and correspond to multiple area locations within a coverage range of the network device.

37. The method according to claim 35 or 36, wherein the second information is sent to the terminal device by the network device or a positioning server, or is predefined in a protocol.

38. The method according to any one of claims 35 to 37, wherein the second information is associated with one of the following:

   a service cell of the terminal device;
   the service cell and a neighboring cell of the terminal device;
   a validity area of the terminal device; and
   an uplink transmission validity area of the terminal device.

39. The method according to any one of claims 27 to 33, wherein the first information comprises a variation of a RSTD.

40. The method according to claim 39, further comprising:
   receiving, by the network device, a first message sent by the terminal device, wherein the first message is configured to report the RSTD and the first message comprises first indication information to indicate one or more of the following:

   whether the terminal device has adjusted the TA;
   the TA adjustment value; and
   the TA.

41. The method according to claim 39 or 40, wherein the TA adjustment value and/or the TA are determined based on the variation of the RSTD and a unit distance associated with a subcarrier spacing.

42. The method according to claim 41, wherein the TA adjustment value satisfies the following formula:

$$\text{the TA adjustment value} = \text{the variation of the RSTD/the unit distance.}$$

43. The method according to claim 41 or 42, wherein the terminal device reselects from a first cell to a second cell, and the unit distance corresponds to the second cell.

44. The method according to claim 39, wherein the terminal device reselects from a first cell to a second cell, and the TA adjustment value and/or the TA correspond to the second cell.

45. The method according to claim 44, further comprising:
   receiving, by the network device receive, a second message sent by the terminal device, wherein the second message is configured to report the RSTD to the first cell and the second message comprises second indication information to indicate one or more of the following:

   the TA adjustment value;
   an effective time of the TA;
   the TA; and
   identification information of the second cell.

46. The method according to claim 45, wherein the RSTD is reported to the first cell before a cell reselection.

47. The method according to claim 45 or 46, further comprising:
   sending, by the network device, the second indication information to the second cell.

48. The method according to claim 44, further comprising:
   receiving, by the network device, a third message sent by the terminal device, wherein the third message is configured to report the RSTD to the second cell and the third message comprises third indication information to indicate one or more of the following:

   whether to adjust the TA;
   the TA adjustment value; and
   The TA.

49. The method according to claim 48, wherein the RSTD is reported to the second cell after a cell reselection.

50. The method according to any one of claims 27 to 33, wherein the first information comprises a synchronization time difference between downlink synchronization times measured by the terminal device at different times.

51. The method according to claim 50, wherein the TA adjustment value satisfies the following formula:

the TA adjustment value = the synchronization time difference/a unit distance;
wherein the unit distance is associated with a subcarrier spacing.

52. The method according to claim 50 or 51, wherein the downlink synchronization time is determined based on a SSB measurement.

53. The method according to any one of claims 27 to 33, wherein the first information comprises a time difference between a downlink synchronization time of a first cell and a downlink synchronization time of a second cell.

54. The method according to claim 53, wherein the TA adjustment value and/or the TA are determined based on the time difference and an offset between a transmission time of the downlink reference signal of the first cell and a transmission time of the downlink reference signal of the second cell.

55. The method according to claim 54, wherein the TA adjustment value satisfies the following formula:

$$\text{the TA adjustment value} = (t1\text{-}t0\text{-}d)/\text{the unit distance;}$$

wherein, t1 represents the downlink synchronization time of the second cell, t0 represents the downlink synchronization time of the first cell, d represents the offset, and the unit distance is determined based on a subcarrier spacing.

56. The method according to any one of claims 53 to 55, wherein in a case that the terminal device reselects from the first cell to the second cell, the TA is determined based on the downlink synchronization time of the second cell.

57. The method according to any one of claims 53 to 56, wherein the downlink synchronization time of the first cell is determined based on a SSB measurement of the cell; and/or
the downlink synchronization time of the second cell is determined based on a SSB measurement of the second cell.

58. A terminal device, comprising:

a determination module, configured to determine a TA adjustment value and/or a TA based on first information;
a first sending module, configured to an uplink signal/channel to a network device based on the TA adjustment value and/or a TA
wherein the first information is associated with one or more of the following:

a downlink measurement amount;
downlink synchronization related information;
a downlink reference time; and
fingerprint information collected by the terminal device.

59. The terminal device according to claim 58, wherein the TA comprises at least one of the following:

a time advance indication; and
an advance time for uplink transmission relative to a downlink reference signal by the terminal device.

60. The terminal device according to claim 58 or 59, wherein the first information comprises one or more of the following:

a reference signal received power (RSRP);
a reference signal time difference (RSTD);
a synchronization signal block (SSB);
a downlink synchronization time of one or more cells;
a downlink reference time of one or more cells; and
the fingerprint information collected by the terminal device.

61. The terminal device according to any one of claims 58 to 60, wherein the first information comprises a variation of a RSRP.

62. The terminal device according to claim 61, wherein the TA adjustment value and/or the TA are determined based on the variation of the RSRP and second information, and the second information is configured to indicate a relationship between the variation of the RSRP and a TA change ratio.

63. The terminal device according to claim 62, wherein the second information comprises multiple types of information, which are respectively configured to indicate various relationships between the variation of the RSRP and the TA change ratio, and correspond to multiple area locations within a coverage range of the network device.

64. The terminal device according to claim 62 or 63, wherein the second information is sent to the terminal device by the network device or a positioning server, or is predefined in a protocol.

65. The terminal device according to any one of claims 62 to 64, wherein the second information is associated with one of the following:

   a service cell of the terminal device;
   the service cell and a neighboring cell of the terminal device;
   a validity area of the terminal device; and
   an uplink transmission validity area of the terminal device.

66. The terminal device according to any one of claims 58 to 60, wherein the first information comprises a variation of a RSTD.

67. The terminal device according to claim 66, further comprising:
a second sending module, configured to send a first message to the network device, wherein the first message is configured to report the RSTD and the first message comprises first indication information to indicate one or more of the following:

   whether the terminal device has adjusted the TA;
   the TA adjustment value; and
   the TA.

68. The terminal device according to claim 66 or 67, wherein the TA adjustment value and/or the TA are determined based on the variation of the RSTD and a unit distance associated with a subcarrier spacing.

69. The terminal device according to claim 68, wherein the TA adjustment value satisfies the following formula:
the TA adjustment value = the variation of the RSTD/the unit distance.

70. The terminal device according to claim 68 or 69, wherein the terminal device reselects from a first cell to the second cell, and the unit distance corresponds to a second cell.

71. The terminal device according to claim 66, wherein the terminal device reselects from a first cell to a second cell, and the TA adjustment value and/or the TA correspond to the second cell.

72. The terminal device according to claim 71, further comprising:
a third sending module, configured to send a second message to the network device, wherein the second message is configured to report the RSTD to the first cell and the second message comprises second indication information to indicate one or more of the following:

   the TA adjustment value;
   an effective time of the TA;
   the TA; and
   identification information of the second cell.

73. The terminal device according to claim 72, wherein the RSTD is reported to the first cell before a cell reselection.

**74.** The terminal device according to claim 71, further comprising:
a fourth sending module, configured to send a third message to the network device, wherein the third message is configured to report the RSTD to the second cell and the third message comprises third indication information to indicate one or more of the following:

whether to adjust the TA;
the TA adjustment value; and
the TA.

**75.** The terminal device according to claim 74, wherein the RSTD is reported to the second cell after a cell reselection.

**76.** The terminal device according to any one of claims 58 to 60, wherein the first information comprises a synchronization time difference between downlink synchronization times measured by the terminal device at different times.

**77.** The terminal device according to claim 76, wherein the TA adjustment value satisfies the following formula:

$$\text{the TA adjustment value} = \text{the synchronization time difference/a unit distance;}$$

wherein the unit distance is associated with a subcarrier spacing.

**78.** The terminal device according to claim 76 or 77, wherein the downlink synchronization time is determined based on a SSB measurement.

**79.** The terminal device according to any one of claims 58 to 60, wherein the first information comprises a time difference between a downlink synchronization time of a first cell and a downlink synchronization time of a second cell.

**80.** The terminal device according to claim 79, wherein the TA adjustment value and/or the TA are determined based on a time difference and an offset between a transmission time of the downlink reference signal of the first cell and a transmission time of the downlink reference signal of the second cell.

**81.** The terminal device according to claim 80, wherein the TA adjustment value satisfies the following formula:

$$\text{the TA adjustment value} = (t1\text{-}t0\text{-}d)/\text{the unit distance;}$$

wherein, t1 represents the downlink synchronization time of the second cell, t0 represents the downlink synchronization time of the first cell, d represents the offset, and the unit distance is determined based on a subcarrier spacing.

**82.** The terminal device according to any one of claims 79 to 81, wherein in a case that the terminal device reselects from the first cell to the second cell, the TA is determined based on the downlink synchronization time of the second cell.

**83.** The terminal device according to any one of claims 79 to 82, wherein the downlink synchronization time of the first cell is determined based on a SSB measurement of the first cell; and/or
the downlink synchronization time of the second cell is determined based on a SSB measurement of the second cell.

**84.** A network device comprising:

a first receiving module, configured to receive an uplink signal/channel sent by a terminal device;
wherein the uplink signal/channel is transmitted based on a timing advance (TA) of the terminal device, and the TA and/or a TA adjustment value of the TA are determined by the terminal device based on first information associated with one or more of the following:

a downlink measurement amount;
downlink synchronization related information;
a downlink reference time; and
fingerprint information collected by the terminal device.

**85.** The network device according to claim 84, wherein the TA comprises at least one of the following:

a time advance indication; and
an advance time for uplink transmission relative to a downlink reference signal by the terminal device.

86. The network device according to claim 84 or 85, wherein the first information comprises one or more of the following:

a reference signal received power (RSRP);
a reference signal time difference (RSTD);
a synchronization signal block (SSB);
a downlink synchronization time of one or more cells;
a downlink reference time for the one or more cells; and
the fingerprint information collected by the terminal device.

87. The network device according to any one of claims 84 to 86, further comprising:

a first determination module, configured to determine that the terminal device has adjusted the TA based on the uplink signal/channel; and/or
a second determination module, configured to determine the TA adjustment value and/or the TA based on the uplink signal/channel.

88. The network device according to claim 87, wherein the uplink signal/channel is a SRS.

89. The network device according to any one of claims 84 to 86, further comprising:

a third determination module, configured to determine whether the terminal device has adjusted the TA based on a downlink measurement amount sent by the terminal device; and/or
a fourth determination module, configured to determine the TA adjustment value and/or the TA based on the downlink measurement amount.

90. The network device according to claim 89, wherein the downlink measurement amount comprises a RSRP.

91. The network device according to any one of claims 84 to 90, wherein the first information comprises a variation of a RSRP.

92. The network device according to claim 91, wherein the TA adjustment value and/or the TA is determined based on the variation of the RSRP and second information, and the second information is configured to indicate a relationship between the variation of the RSRP and a TA change ratio.

93. The network device according to claim 92, wherein the second information comprises multiple types of information, which are configured to respectively indicate various relationships between the variation of the RSRP and the TA change ratio, and correspond to multiple area locations within a coverage range of the network device.

94. The network device according to claim 92 or 93, wherein the second information is sent to the terminal device by the network device or a positioning server, or is predefined in a protocol.

95. The network device according to any one of claims 92 to 94, wherein the second information is associated with one of the following:

a service cell of the terminal device;
the service cell and a neighboring cell of the terminal device;
a validity area of the terminal device; and
an uplink transmission validity area of the terminal device.

96. The network device according to any one of claims 84 to 90, wherein the first information comprises a variation of a RSTD.

97. The network device according to claim 96, further comprising:
a second receiving module, configured to receive a first message sent by the terminal device, wherein the first message is configured to report the RSTD, and the first message comprises first indication information to indicate one or more of the following:

whether the terminal device has adjusted the TA;
the TA adjustment value; and
the TA.

98. The network device according to claim 96 or 97, wherein the TA adjustment value and/or the TA are determined based on the variation of the RSTD and a unit distance associated with a subcarrier spacing.

99. The network device according to claim 98, wherein the TA adjustment value satisfies the following formula:

$$\text{the TA adjustment value} = \text{the variation of the RSTD/the unit distance.}$$

100.
The network device according to claim 98 or 99, wherein the terminal device reselects from a first cell to a second cell, and the unit distance corresponds to the second cell.

101.
The network device according to claim 96, wherein the terminal device reselects from a first cell to a second cell, and the TA adjustment value and/or the TA correspond to the second cell.

102.
The network device according to claim 101, further comprising:
a third receiving module, configured to receive a second message sent by the terminal device, wherein the second message is configured to report the RSTD to the first cell and the second message further comprises second indication information to indicate one or more of the following:

the TA adjustment value;
an effective time of the TA;
the TA; and
identification information of the second cell.

103.
The network device according to claim 102, wherein the RSTD is reported to the first cell before a cell reselection.

104.
The network device according to claim 102 or 103, further comprising:
a sending module, configured to send the second indication information to the second cell.

105.
The network device according to claim 101, further comprising:
a fourth receiving module, configured to receive a third message sent by the terminal device, wherein the third message is configured to report the RSTD to the second cell and the third message further comprises third indication information to indicate one or more of the following:

whether to adjust the TA;
the TA adjustment value; and
The TA.

106.
The network device according to claim 105, wherein the RSTD is reported to the second cell after a cell reselection.

107.
The network device according to any one of claims 84 to 90, wherein the first information comprises a synchronization time difference between downlink synchronization times measured by the terminal device at different times.

108.

The network device according to claim 107, wherein the TA adjustment value satisfies the following formula:

$$\text{the TA adjustment value} = \text{the synchronization time difference/a unit distance;}$$

wherein the unit distance is associated with a subcarrier spacing.

**109.**
The network device according to claim 107 or 108, wherein the downlink synchronization time is determined based on a SSB measurement.

**110.**
The network device according to any one of claims 84 to 90, wherein the first information comprises a time difference between a downlink synchronization time of a first cell and a downlink synchronization time of a second cell.

**111.** The network device according to claim 110, wherein the TA adjustment value and/or the TA are determined based on the time difference and an offset between the transmission time of the downlink reference signal of the first cell and a transmission time of the downlink reference signal of the second cell.

**112.**
The network device according to claim 111, wherein the TA adjustment value satisfies the following formula:

$$\text{the TA adjustment value} = (t1\text{-}t0\text{-}d)/\text{the unit distance;}$$

wherein, t1 represents the downlink synchronization time of the second cell, t0 represents the downlink synchronization time of the first cell, d represents the offset, and the unit distance is determined based on a subcarrier spacing.

**113.**
The network device according to any one of claims 110 to 112, wherein in a case that the terminal device reselects from the first cell to the second cell, the TA is determined based on the downlink synchronization time of the second cell.

**114.**
The network device according to any one of claims 110 to 113, wherein the downlink synchronization time of the first cell is determined based on a SSB measurement of the first cell; and/or
the downlink synchronization time of the second cell is determined based on a SSB measurement of the second cell.

**115.**
A terminal device comprising a transceiver, a memory, and a processor, wherein the memory is configured to store a program, and the processor is configured to call the program in the memory to cause the terminal device to perform the wireless communication method according to any one of claims 1 to 26.

**116.**
A network device comprising a transceiver, a memory, and a processor, wherein the memory is configured to store a program, and the processor is configured to call the program in the memory to cause the network device to perform the wireless communication method according to any one of claims 27 to 57.

**117.**
An apparatus, comprising a processor for calling a program from a memory to cause the apparatus to perform the wireless communication method according to any one of claims 1 to 57.

**118.**
A chip, comprising a processor for calling programs from a memory to cause a device installed with the chip to perform the wireless communication method according to any one of claims 1 to 57.

**119.**
A computer-readable storage medium storing a program which causes a computer to perform the wireless communication method according to any one of claims 1 to 57.

**120.**
A computer program product comprising a program which causes a computer to perform the wireless communication method according to any one of claims 1 to 57.

**121.**
A computer program, wherein the computer program causes a computer to perform the wireless communication method according to any one of claims 1 to 57.

100

110

120

120

FIG. 1

Downlink sending
time

Downlink receiving time
(transmission delay of $T_{P1}$) of a
closer UE

$T_{P1}$

Uplink sending time

Uplink receiving time

$T_{P1}$

Downlink receiving time
(transmission delay of $T_{P2}$) of a
father UE

$T_{P2}$

Uplink sending time

Uplink receiving time

$T_{P2}$

Arrival times at the base station are
not aligned

Time

FIG. 2A

EP 4 757 482 A1

FIG. 2B

FIG. 3

Reference network
device

First RSTD

UE

Original
location

Measurement
network device

Second RSTD

UE

New location

FIG. 4

Network device of the
second cell

d

t

Network device of the
first cell

t

UE

t0          t1

t

FIG. 5

EP 4 757 482 A1

```
┌─────────────────┐                          ┌─────────────────┐
│ Terminal device │                          │ Network device  │
└─────────────────┘                          └─────────────────┘
┌──────────────────────────────┐
│ S610, determine a TA adjustment value │
│ and/or the TA based on the first      │
│ information.                          │
└──────────────────────────────┘
        │        S620, uplink signal/channel        │
        │──────────────────────────────────────────>│
        │                                            │
        │                          ┌────────────────────────────────┐
        │                          │ S630, determine relevant       │
        │                          │ information of the TA adjustment│
        │                          │ based on the uplink signal/channel.│
        │                          └────────────────────────────────┘
```

FIG. 6

```
┌─────────────────┐                          ┌─────────────────┐
│ Terminal device │                          │ Network device  │
└─────────────────┘                          └─────────────────┘
┌──────────────────────────────┐
│ S710, determine a TA adjustment value │
│ and/or the TA based on the first      │
│ information.                          │
└──────────────────────────────┘
        │      S720, uplink signal/channel         │
        │─────────────────────────────────────────>│
        │                       ┌──────────────────────────────────┐
        │                       │ S730, determine the relevant information│
        │                       │ of the TA adjustment based on a downlink│
        │                       │ measurement amount sent by the terminal │
        │                       │ device.                          │
        │                       └──────────────────────────────────┘
```

FIG. 7

```
┌─────────────────┐                          ┌─────────────────┐
│ Terminal device │                          │ Network device  │
└─────────────────┘                          └─────────────────┘
        │        S810, configuration information     │
        │<───────────────────────────────────────────│
┌──────────────────────────────────┐
│ S820, determine a TA adjustment value │
│ and/or the TA based on the first      │
│ information.                          │
└──────────────────────────────────┘
        │         S830, uplink signal/channel         │
        │────────────────────────────────────────────>│
```

FIG. 8

Terminal device 900

Determination module 910

First sending module 920

FIG. 9

Apparatus 1100

Processor
1110

Memory
1120

Transceiver
1130

FIG. 10

Network device 1000

First receiving module 1010

First determination module 1020

Second determination module 1030

FIG. 11

## INTERNATIONAL SEARCH REPORT

| International application No. |
| --- |
| **PCT/CN2023/110587** |

| A. | CLASSIFICATION OF SUBJECT MATTER |
| --- | --- |
| | H04W74/08(2024.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    3GPP, CNTXT, ENTXT, ENTXTC: TA, 调整值, 调整量, 变化值, 变化量, 修正, 比, 比例, 比率, 比值, 同步, 下行参考时间, 下行测量, 下行同步, 指纹, 距离, distance, ratio, RSRP, RSRQ, RSSI, RSTD, SINR, SSB, TA

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2023030341 A1 (HUAWEI TECHNOLOGIES CO., LTD.) 09 March 2023 (2023-03-09) claims 1-25 | 1-4, 9-10, 14-19, 21-23, 25-34, 39-40, 44-50, 52-54, 56-61, 66-67, 71-76, 78-80, 82-91, 96-97, 101-107, 109-111, 113-121 |
| Y | US 2022094508 A1 (NOKIA TECHNOLOGIES OY) 24 March 2022 (2022-03-24) description, paragraphs [0020]-[0111] | 1-4, 9-10, 14-19, 21-23, 25-34, 39-40, 44-50, 52-54, 56-61, 66-67, 71-76, 78-80, 82-91, 96-97, 101-107, 109-111, 113-121 |
| A | WO 2023040822 A1 (VIVO MOBILE COMMUNICATION CO., LTD.) 23 March 2023 (2023-03-23) entire document | 1-121 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 April 2024** | **24 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/110587** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2023108416 A1 (GUANGDONG OPPO MOBILE TELECOMMUNICATIONS CORP., LTD.) 22 June 2023 (2023-06-22) entire document | 1-121 |

Form PCT/ISA/210 (second sheet) (July 2022)

## INTERNATIONAL SEARCH REPORT
### Information on patent family members

International application No.

**PCT/CN2023/110587**

| Patent document cited in search report | | | Publication date (day/month/year) | Patent family member(s) | | | Publication date (day/month/year) |
|---|---|---|---|---|---|---|---|
| WO | 2023030341 | A1 | 09 March 2023 | CN | 115734335 | A | 03 March 2023 |
| US | 2022094508 | A1 | 24 March 2022 | WO | 2020188144 | A1 | 24 September 2020 |
| WO | 2023040822 | A1 | 23 March 2023 | CN | 115811765 | A | 17 March 2023 |
| WO | 2023108416 | A1 | 22 June 2023 | None | | | |

Form PCT/ISA/210 (patent family annex) (July 2022)